(19) Europäisches Patentamt
European Patent Office
Office européen des brevets

(11) **EP 1 656 234 B1**

(12) **EUROPÄISCHE PATENTSCHRIFT**

(45) Veröffentlichungstag und Bekanntmachung des Hinweises auf die Patenterteilung:
**17.01.2007 Patentblatt 2007/03**

(21) Anmeldenummer: **05783447.5**

(22) Anmeldetag: **25.08.2005**

(51) Int Cl.:
**B23K 26/38** (2006.01)    **B23K 26/06** (2006.01)

(86) Internationale Anmeldenummer:
**PCT/EP2005/009196**

(87) Internationale Veröffentlichungsnummer:
**WO 2006/021442 (02.03.2006 Gazette 2006/09)**

(54) **SCANKOPF ALS TEIL EINER LASER BOHR- UND SCHNEIDEINRICHTUNG**

SCAN HEAD AS PART OF A LASER DRILLING AND CUTTING DEVICE

TETE DE BALAYAGE FAISANT PARTIE D'UN DISPOSITIF DE FORAGE ET DE DECOUPE LASER

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **26.08.2004 DE 102004041389**
**04.11.2004 DE 102004053298**

(43) Veröffentlichungstag der Anmeldung:
**17.05.2006 Patentblatt 2006/20**

(73) Patentinhaber: **ARGES Gesellschaft für Industrieplanung und Lasertechnik m.b.H.**
**92507 Nabburg (DE)**

(72) Erfinder:
• **HARTMANN, Martin**
**90559 Burgthann (DE)**
• **BADYUKOV, Dmitry**
**92507 Nabburg (DE)**
• **GUGGENMOOS, Markus**
**92421 Schwandorf (DE)**

(74) Vertreter: **Kruspig, Volkmar**
**Meissner, Bolte & Partner GbR**
**Postfach 86 06 24**
**81633 München (DE)**

(56) Entgegenhaltungen:
**DE-A1- 10 054 853    US-A1- 2004 017 430**

## Beschreibung

Die Erfindung betrifft einen Scankopf als Teil einer Laser Bohr- und Schneideinrichtung nach dem Oberbegriff des Anspruchs 1 (siehe US-A-2004 0 017 430).

Bohr- und Schneideinrichtungen, bei denen unter Verwendung gebündelter Lichtenergie in Form eines Laserstrahls in eine vorgegebene Probe Löcher oder Konturen geschnitten oder Teile ausgeschnitten werden, sind bekannt. Diese Verfahren sind unter den Begriffen Laserbrennschneiden, Laserschmelzschneiden und Lasersublimierschneiden bekannt. Bei diesen Verfahren wird das Material einer Probe durch die konzentrierte Energie eines Laserstrahles aufgeheizt und aufgeschmolzen. Das verflüssigte Material wird anschließend von einem Schneidgas aus der gratfreien Schnittfuge geblasen. Das Laserschneiden eignet sich zum Schneiden metallischer oder nichtmetallischer Werkstoffe. Dabei werden z. B. bei Stahlblechen von 1 mm Dicke Schnittgeschwindigkeiten von bis zu 10 m/s erreicht.

Bei derartigen Einrichtungen besteht eines der Hauptprobleme darin, die im Laserstrahl enthaltene Energie möglichst auf den Focus der Probe zu bündeln, dessen Intensität, Focus-Größe und Focus-Position mit einer möglichst hohen Genauigkeit und einer möglichst kurzen Ansprechzeit zu beeinflussen und damit eine optimale Qualität des Schneid- oder Bohrvorganges sicherzustellen.

Dabei zeigt sich, dass die in der Lasertechnik bislang verwendeten Mittel zur Strahlbeeinflussung eine Reihe von Nachteilen hinsichtlich der erreichten Strahlintensität und auf der Probe erreichten Leistungsdichten aufweisen.

Weiterhin hat sich in der Praxis des Laserschneidens bzw. Bohrens offenbart, dass die Qualität der erzeugten Bohrungen bzw. Schnittkanten in sehr empfindlicher Weise vom Auftreffwinkel des Laserstrahls im Fokus des bearbeiteten Gebietes abhängt, wobei insbesondere beim Laserbohren der Bohrvorgang dadurch intensiviert werden kann, indem der Laser eine trepanierende, d.h. eine um das Bohrzentrum herum kreisende bzw. taumelnde Bewegung ausführt. Die Erzeugung einer solchen Trepanierbewegung in Verbindung mit einer stufenlosen Intensitätsregulierung des Laserstrahls stellt jedoch in der Technik des Laserbohrens und Schneidens eine Aufgabe mit einem hohen Schwierigkeitsgrad dar, die nur mit entsprechend aufwendigen Vorrichtungen verwirklicht werden kann und daher den gesamten Scankopf der Schneid- bzw. Bohreinrichtung nachhaltig verkompliziert.

Aus dem Vorgenannten ist es daher Aufgabe der Erfindung, einen Scankopf mit Mitteln zur Strahlbeeinflussung als Teil einer Laser Bohr- und Schneideinrichtung anzugeben, der über Komponenten verfügt, mit denen sowohl die Intensität des Laserstrahls, als auch dessen Focus-Position und Fokus-Bewegung auf dem Bearbeitungsgebiet der Probe in einfacher Weise justiert bzw. erzeugt werden kann. Diese Komponenten sollen darüber hinaus eine Steuerung der Leistungsdichte und der Position des Focus in einer online-Steuerung während des Betriebs der Bohr- und Schneideinrichtung ermöglichen.

Die Aufgabe wird mit einem Scankopf als Teil einer Laser Bohr- und Schneideinrichtung mit den Merkmalen des Anspruchs 1 gelost, wobei die Merkmale der Unteransprüche mindestens vorteilhafte bzw. zweckmäßige Ausführungsformen oder Weiterbildungen des Gegenstandes des Hauptanspruches enthalten.

Der Scankopf ist erfindungsgemäß durch eine im Lichtweg bzw. Strahlengang des Lasers angeordnete Reihe folgender Komponenten gekennzeichnet: Er weist eine intensitätsregulierende Strahldämpfungseinheit in Verbindung mit einer eine parallele Strahlversetzung regulierenden Taumeleinheit, ein den Strahlquerschnitt des Lasers vergrößerndes Strahl-Expander-Teleskop, einen den Focus des Lasers führenden Scanblock und eine den Laserstrahl auf die Probe fokussierende Arbeitseinheit auf.

Weiterhin sind optional in den Lichtweg einkoppelbare zusätzliche Prüf- und Kontrolleinheiten vorgesehen.

Dabei bildet der Scankopf eine Gesamtheit aus den genannten und aufeinander abgestimmten Einheiten, die den Strahlquerschnitt, die Strahlintensität, die Position des Laserfocus auf der Probe und die Strahlversetzung des Lasers bezüglich der optischen Achse des Scankopfs regeln.

Die Strahldämpfungseinheit ist hierbei als eine in dem Lichtweg angeordnete Folge aus einem $\lambda/2$-Plättchen bzw. Retarder, einem ersten Brewster-Fenster und einem zweiten Brewster-Fenster ausgebildet. Dabei sind der Retarder und/ oder mindestens eines der beiden Brewster-Fenster drehbar um die optische Achse ausgeführt.

Die Strahldämpfungseinheit baut auf den optischen Gesetzen der von der Lage der Polarisationsebene des auf eine optische Grenzfläche einfallenden Lichtes abhängigen Reflexion bzw. Transmission auf. Der Retarder stellt hierbei die Polarisationsebene des Lasers ein, während das erste Brewster-Fenster in Form einer im Brewster-Winkel angeordneten lichtdurchlässigen Platte den Strahl in Abhängigkeit von der durch den Retarder vorgegebenen Polarisationsebene mit einer veränderlichen Transmission passieren lässt. Das zweite Brewster-Fenster korrigiert hierbei den in dem ersten Brewster-Fenster hervorgerufenen Strahlversatz. Sowohl der Retarder, als auch eines der beiden Brewster-Fenster, insbesondere das erste Fenster, oder auch beide Brewster-Fenster sind hierbei um die optische Achse drehbar ausgeführt und ermöglichen somit eine relative Drehung der Polarisationsebene des Lasers bezüglich der optischen Grenzfläche des ersten Brewster-Fensters.

Zweckmäßigerweise ist eine den Retarder um die optische Achse drehende Galvanometereinheit vorgesehen. Mit dieser Ausführungsform ist zum einen eine sehr präzise Einstellung der Polarisationsebene des Lasers möglich, wobei zum anderen der Retarder als ein relativ massearmes optisches Element leicht und mit einer geringen Ansprechzeit bewegt werden kann.

Bei einer Ausführungsform ist zwischen der Strahldämpfungseinheit und der Taumeleinheit eine die Polarisationsrichtung der Laserstrahlung drehende Rotatoreinheit eingefügt.

Das die Strahldämpfungseinheit verlassene Laserlicht ist quasi vollständig linear polarisiert. Die Rotatoreinheit dient dazu, die Polarisationsrichtung des Laserlichtes zu verändern bzw. zu beeinflussen und definiert einzustellen.

Hierzu weist die Rotatoreinheit ein λ/2-Plättchen mit einem extern einstellbaren Einstellwinkel auf. Bei einer Verdrehung des λ/2-Plättchens um einen gegebenen Winkel verstellt sich der Polarisationsvektor des Laserstrahls nach dem Rotator um das doppelte dieses Einstellwinkels.

Zweckmäßigerweise entspricht der Einstellwinkel des λ/2-Plättchens einer im wesentlichen bezüglich einer Schnittfugenflanke senkrecht gerichteten linearen Polarisationsrichtung des Laserlichtes. Dadurch kann die Qualität der erzeugten Schnittfuge nachhaltig verbessert werden.

Zu diesem Zweck kann bei einer vorteilhaften Ausführungsform eine den Einstellwinkel des λ/2-Plättchens in Abhängigkeit von einer vorgegebenen Schnittfugenkontur verändernde Steuereinheit in Verbindung mit einer mechanischen Einstelleinheit vorgesehen sein.

Die Steuereinheit registriert hierbei den Schnittfugenverlauf und die aktuelle Position des Brennflecks und errechnet daraus eine Kurvennormale, die der einzustellenden Polarisationsrichtung entspricht. Die mechanische Einstelleinheit stellt dann den Einstellwinkel des λ/2-Plättchens in Abhängigkeit von einem Steuersignal der Steuereinheit ein und gewährleistet damit die gewünschte Polarisationsrichtung des Lasers im Brennfleck.

Die Taumeleinheit ist insbesondere aus einer in den Lichtweg eingebrachten Anordnung aus zwei planparallelen Fenstern ausgebildet. Dabei sind sowohl das erste planparallele Fenster als auch das zweite planparallele Fenster drehbar gelagert, wobei deren jeweilige Drehachsen und die Ausbreitungsrichtung des Laserstrahls orthogonal zueinander orientiert sind.

Mit der Taumeleinheit wird der parallele Strahlversatz des Lasers bezüglich der optischen Achse durch Nutzung der Gesetze des Strahlengangs durch planparallele Platten geregelt. Durch die zueinander orthogonale Anordnung von optischer Achse bzw. den Drehachsen der beiden planparallelen Fenster kann jeder beliebige parallele Strahlversatz bezüglich der optischen Achse im Raum erreicht werden, indem Rotationen der planparallelen Fenster um ihre jeweiligen Drehachsen in Kombination und aufeinander abgestimmt ausgeführt werden.

Zur Rotation der planparallelen Fenster können auch an dieser Stelle Galvanometereinheiten als Antrieb vorgesehen werden. Damit sind präzise Rotationsbewegungen und reproduzierbare Einstellwinkel für die planparallelen Fenster realisierbar.

Das Strahl-Expander-Teleskop ist in einer vorteilhaften Ausführungsform als eine refraktive strahlaufweitende Linsenanordnung ausgeführt. Refraktive Linsenanordnungen ermöglichen eine lineare Bauform ohne Umkehrungen von Lichtwegen und sind daher für den von der Erfindung berührten Einsatzbereich besonders vorteilhaft. Weiterhin entfällt durch die auf Transmission ausgelegte Anordnung eine Kühlung reflektierender Flächen und die gesamte Anordnung kann daher besonders einfach gestaltet werden.

Hierbei erweist sich das Strahl-Expander-Teleskop in Form eines Gallilei-Teleskops mit mindestens einer Konkav-Linse und mindestens einer konvexen Kollimationslinsenanordnung als besonders zweckmäßig. Bei einer derartigen Ausführungsform werden durch die Anordnung der Linsen bedingte Brennpunkte innerhalb der Vorrichtung vermieden und die Baulänge der Linsenanordnung größtmöglich verkürzt.

Zweckmäßigerweise weist das Strahl-Expander-Teleskop eine aberrationskorrigierende Linsenanordnung auf.

In einer Fortbildung des Strahl-Expander-Teleskops sind die Konkav-Linse und/oder die Kollimationslinsen-Anordnung entlang der optischen Achse verschiebbar gelagert. Dadurch kann die numerische Apertur des Linsensystems in Verbindung mit der Form des Laserstrahls geändert werden, wobei allerdings die Strahlkollimation geringfügig und innerhalb gewisser Toleranzen beeinträchtigt wird.

Der Scanblock ist in einer zweckmäßigen Ausführungsform als eine Anordnung aus zwei rotierenden Einzelspiegeln ausgebildet. Hierbei wird der Strahl durch jeweils einen Spiegel in eine entsprechende Richtung abgelenkt und der Focus auf der Probe somit verschoben.

Die Einzelspiegel sind hierbei vorteilhafterweise auf Rotationseinrichtungen für Winkelgeschwindigkeiten im Bereich von 90 rad/s und mehr angeordnet. Dadurch kann die zu bearbeitende Kontur in einer hohen Geschwindigkeit abgearbeitet werden.

Die Arbeitseinheit ist zweckmäßigerweise in Form einer Kombination aus einer Fokussierungsoptik und einer Gasdüse ausgebildet. Die Fokussierungsoptik bündelt die Lichtenergie des Lasers auf einen engen Raumbereich und ermöglicht somit eine hohe Leistungsdichte, während die Gasdüse der Zufuhr eines Schutzgases oder zum Ausblasen der durch den Laser verflüssigten Probenbestandteile dient.

Zur Korrektur mindestens einer sphärischen Aberration und/oder einer Coma-Aberration weist die Fokussierungsoptik optische Korrekturelemente auf. Weiterhin ist die Gasdüse mit einem programmgesteuerten Druckventil ausgestattet.

Als eine erste zusätzliche Prüf- und Kontrolleinheit ist eine Strahl-Profil-Einheit mit Komponenten zu einem wahlweisen Einkoppeln der Strahl-Profil-Einheit in den Lichtweg, verschiedenen Filtereinrichtungen und einer das Strahlprofil des Lasers detektierenden Kameraeinrichtung vorgesehen.

Diese Einheit dient zu einer Beurteilung der Qualität des Laserstrahls, insbesondere dessen Energieverteilung über dem Strahlquerschnitt. Sie wird bei Bedarf in den Strahlengang eingekoppelt und ermöglicht die Überwachung gleichbleibender Strahleigenschaften.

Die in der Strahl-Profil-Einheit angeordnete Komponente zum wahlweisen Einkoppeln ist zweckmäßigerweise durch einen Verschluss, insbesondere in Form eines einklappbaren Spiegels oder Prismas ausgebildet. Eine erste Filtereinrichtung in der Strahl-Profil-Einheit ist durch eine ein Doppelbild vermeidende Keilplatte in Verbindung mit einem Blindverschluss ausgeführt. Die Keilplatte dient hierbei sowohl als Umlenkspiegel, als auch als intensitätsabschwächendes Element.

Eine weitere Filtereinrichtung ist durch eine intensitätsmindernde Absorptionsfilteranordnung, insbesondere eine Absorptionsfilterkaskade ausgebildet. Diese reduziert die Intensität des Laserlichtes auf ein für die Kameraeinrichtung unschädliches Maß.

Als eine weitere Filtereinrichtung ist ein für eine gegebene Arbeitswellenlänge durchlässiger Interferenzfilter vorgesehen. Damit können die Eigenschaften des Laserstrahls ohne störende Hintergrundstrahlung analysiert werden.

Als Kameraeinrichtung ist zweckmäßigerweise eine CCD-Kamera in Verbindung mit einer Bildverarbeitungssoftware vorgesehen. Dadurch ist es möglich, eine Reihe von Eigenschaften des Laserstrahls in einfacher Weise zu visualisieren, indem die von der CCD-Kamera digitalisierte Bildinformation verarbeitet und aufbereitet wird.

Weiterhin ist als zusätzliche Prüf- und Kontrolleinheit eine die Plasmabildung und -struktur registrierende Plasmadetektor-Einheit vorgesehen. Damit kann die Ausbildung des Plasmas in der Zone des Laserfocus und somit in der Schneid- oder Bohrzone der Probe betrachtet und beurteilt werden.

Insbesondere weist die Plasmadetektor-Einheit einen halbdurchlässigen Spiegel, eine Koppeloptik und einen Plasmadetektor auf. Der halbdurchlässige Spiegel reflektiert hierbei den Anteil des von dem Plasma erzeugten sichtbaren Lichtes im Bereich des Focus zum Plasmadetektor und blendet den Anteil des Laserlichtes aus. Die Koppeloptik ermöglicht eine optimale Lichtbündelung des von dem Plasma ausgesandten Lichtes auf den Plasmadetektor.

Weiterhin ist eine zusätzliche Prüf- und Kontrolleinheit in Form einer Sichteinheit zum visuellen Betrachten des Focus vorgesehen. Diese Betriebseinheit ermöglicht es dem Nutzer, den Scankopf präzise über der Probe einzurichten und das behandelte Gebiet der Probe während der Bearbeitung zu betrachten und zu beurteilen.

Zu diesem Zweck weist die Sichteinheit eine mit der Fokussierungsoptik zusammen wirkende Projektionsoptik, eine Filtereinrichtung und eine Kameraeinrichtung, insbesondere eine CCD-Kameraeinrichtung, auf. Die Projektionsoptik bildet das behandelte Gebiet der Probe auf die CCD-Kamera ab, wobei die vorhergehend erwähnte Fokussierungsoptik als ein Objektiv für Projektionsoptik wirkt, während der Filter das CCD-Array vor einer Überlastung schützt.

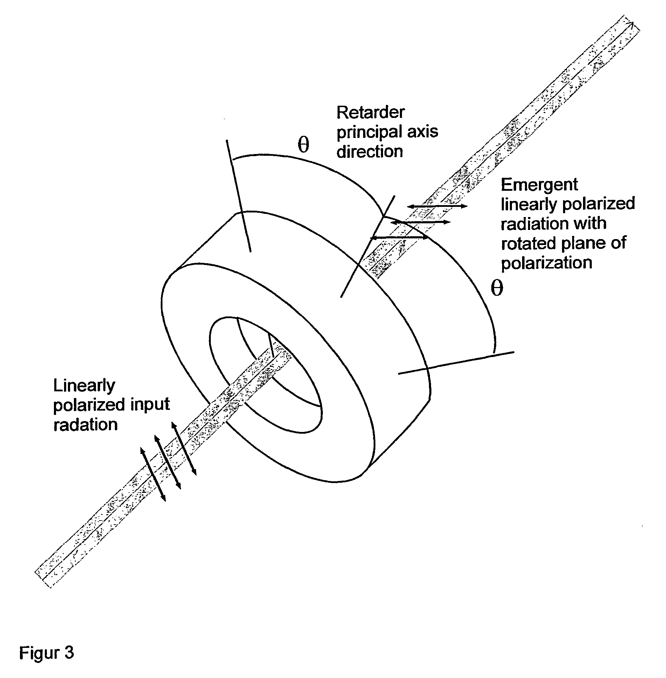

Der Scankopf soll nachfolgend anhand beispielhafter Ausführungsformen näher erläutert werden. Zur Verdeutlichung dienen die nachfolgenden Figuren 1 bis 15. Es werden für gleiche bzw. gleichwirkende Teile die selben Bezugszeichen verwendet.

Es zeigen:

Fig. 1a           eine Darstellung aller Komponenten des Scankopfes in einer beispielhaften Gesamtansicht,

Fig. 1b           eine Darstellung eines um eine zusätzliche Rotatoreinheit erweiterten Scankopfes

Fig. 2a, 2b          eine erläuternde Darstellungen zur Reflexion an optischen Grenzflächen,

Fig. 3           eine Darstellung eines Retarders und dessen Wirkungsweise,

Fig. 4           eine Darstellung des Zusammenwirkens des Retarders mit einer Anordnung aus Brewster-Fenstern,

Fig. 4a           eine schematische Darstellung eines $\lambda$/2-Plättchens als Teil der Rotatoreinheit mit einer schematischen Darstellung einer rotierenden Polarisationsrichtung,

Fig. 4b           eine Darstellung einer senkrecht auf eine Schneidkante orientierten Polarisationsrichtung,

Fig. 5           eine erläuternde Darstellung des Strahlversatzes an einer planparallelen Platte,

Fig. 6           eine schematische Darstellung einer beispielhaften Taumeleinheit,

Fig. 7a, 7b          eine erläuternde Darstellung eines Linsensystems in einem beispielhaften Strahl-Expander-Teleskop,

Fig. 8 eine beispielhafte Darstellung einer Spiegelanordnung eines Scanblocks,

Fig. 9 eine erläuternde Darstellung einer sphärischen Aberration,

Fig. 10 eine erläuternde Darstellung einer Coma-Aberration,

Fig. 11 eine beispielhafte Darstellung einer Fokussierungsoptik,

Fig. 12 eine beispielhafte Darstellung einer Strahlprofil-Einheit,

Fig. 13a eine beispielhafte Darstellung eines mit einem CCD-Array aufgenommenen Strahlprofils,

Fig. 13b, 13c beispielhafte Darstellungen des Strahlprofils aus Fig. 13a nach einer Softwarebearbeitung,

Fig. 14a eine beispielhafte Darstellung eines Plasmadetektors,

Fig. 14b eine beispielhafte Darstellung einer Sichteinheit und

Fig. 15 eine erläuternde Darstellung einer Objektabbildung an einer Linsenanordnung aus zwei Linsen.

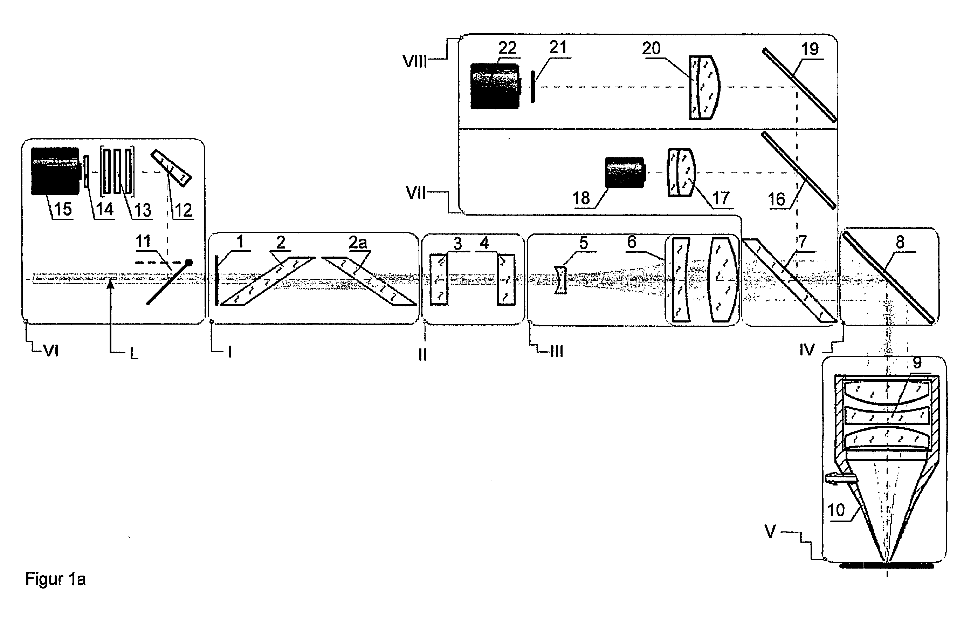

Fig. 1a zeigt eine beispielhafte Gesamtansicht aller Komponenten des Scankopfs. Der von einer nicht gezeigten Laserquelle erzeugte und von links in die optischen Komponenten des Scankopfs eintretende Laserstrahl L passiert als erstes eine Strahl-Dämpfungseinheit I. Diese dient der stufenlosen Variation der Stärke des Lasers in einem online-Betrieb während der Ausführung einer Laserbohrung oder eines Laserschneidens. Der Strahl tritt anschließend in die Taumeleinheit II ein. Die Hauptaufgabe der Taumeleinheit besteht darin, einen zur optischen Achse parallelen Strahlversatz zu erzeugen und somit variable Einfallswinkel des Lasers auf der bearbeiteten Probe zu ermöglichen. Das in der Taumeleinheit ausgeführte Verfahren wird auch als Taumelprozess bezeichnet.

Die darauf folgende Strahl-Expander-Einheit bzw. das Strahl-Expander-Teleskop III führt im wesentlichen drei wichtige Aufgaben aus. Zum einen erhöht diese Einheit die effektive Strahlapertur zum Erzeugen einer geforderten Größe des Focus. Weiterhin erhöht sie den durch die Taumeleinheit erzeugten parallelen Strahlversatz, sichert dadurch einen geforderten Einfallswinkel und steuert in Form einer Verschiebung des Brennpunktes in Z-Richtung die Position des fokussierten Laserstrahls in der Ausbreitungsrichtung. Ein Strahlteiler 7 separiert anschließend eine von der Probenoberfläche zurücklaufende sichtbare Strahlung aus der Ausbreitungsrichtung des Laserlichtes und lenkt diese in eine Reihe von Prüf- und Kontrolleinheiten. Damit wird eine visuelle Beobachtung des Bohr- und Schneidprozesses und eine Plasmadetektion ermöglicht.

In einem darauf folgenden Scanblock IV wird der Laserstrahl mit einer Spiegelanordnung in eine X bzw. Y-Richtung abgelenkt, wobei der Focus des Lasers eine geforderte Kurve auf die Probenoberfläche beschreibt. Schließlich wird durch die Arbeitseinheit V mit Hilfe einer darin angeordneten Fokussierungsoptik 9 die Energie des Laserstrahls auf die zu bearbeitende Probe fokussiert.

Weiterhin sind eine Reihe zusätzlicher Prüf- und Kontrolleinheiten vorgesehen. In dem Ausführungsbeispiel in Fig. 1a ist eine Strahl-Profil-Einheit VI zum Überprüfen der Parameter des Laserstrahls vor allen übrigen Komponenten in den Strahlengang eingefügt und kann gegebenenfalls über einen Verschluss 11 zugeschaltet werden. Eine über den Strahlteiler 7 mit im wesentlichen sichtbarem Licht beschickte Plasmadetektor-Einheit VII und eine Sichteinheit VII vervollständigen den in Fig. 1a dargestellten beispielhaften Aufbau.

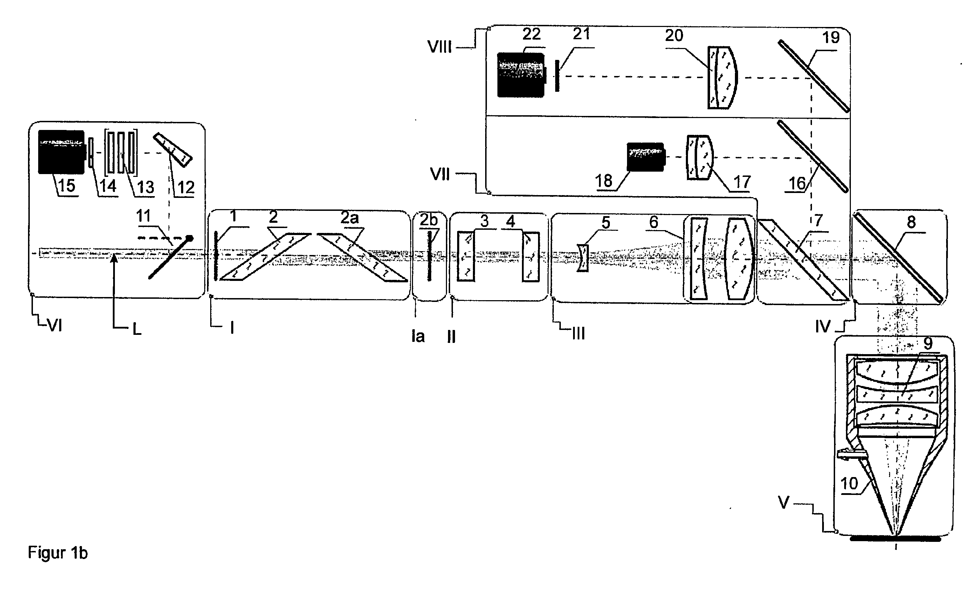

Das Ausführungsbeispiel aus Fig. 1b entspricht weitgehend der in Fig. 1a gezeigten Ausführungsform. Jedoch ist bei diesem Ausführungsbeispiel zwischen der Strahldämpfungseinheit I und der Taumeleinheit III eine Rotatoreinheit Ia eingefügt, die ein rotierendes $\lambda/2$- Plättchen aufweist, mit dessen Hilfe die Polarisationsrichtung des Laserlichtes eingestellt werden kann.

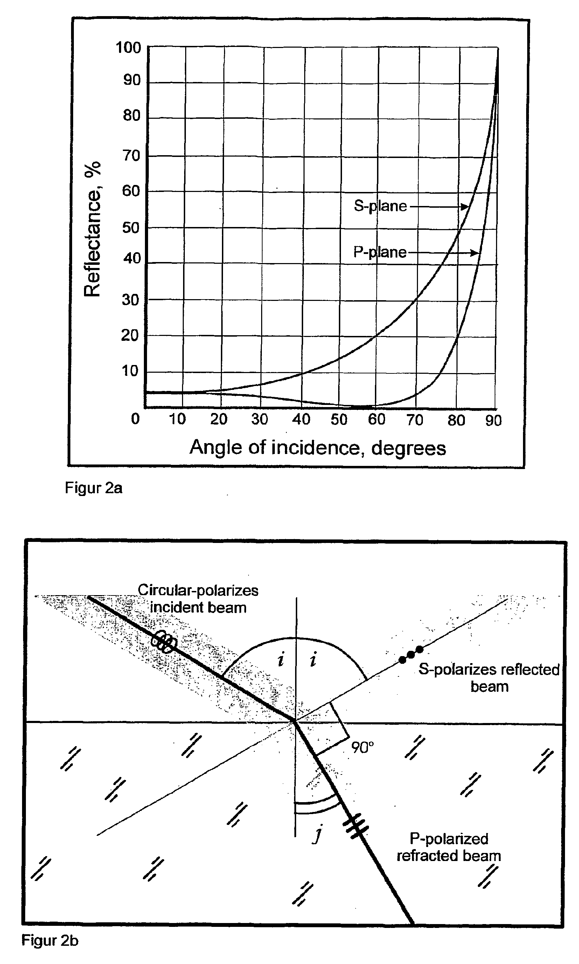

Im Folgenden wird als erstes die Strahldämpfungs-Einheit I beispielhaft näher erläutert. Der physikalische Hintergrund dieses Scankopf-Moduls beruht auf der Reflexion und Polarisation von Licht an dielektrischen optischen Grenzflächen, insbesondere auf dem Phänomen des Brewster-Winkels. Die Figuren 2a und 2b verdeutlichen hierzu den physikalischen Sachverhalt.

Entsprechend den Fresnelschen Reflexionsgesetzen ist der Reflexionskoeffizient für einfallendes Licht, das an einer Grenzfläche zwischen zwei dielektrischen Medien reflektiert wird, vom Einfallswinkel und von der Polarisationsrichtung des Lichtes abhängig. Der Polarisationszustand der Strahlung dabei als eine Superposition zweier orthogonal zueinander orientierter linearer Polarisationsrichtungen aufgefasst werden. Diese grundlegenden Richtungen sind durch ihre Lage bezüglich der durch den einfallenden Strahl und der Oberflächennormale der Grenzfläche im Auftreffpunkt des einfallenden Strahls gebildeten Einfallsebene definiert. Die senkrecht zur Einfallsebene gerichtete Polarisationsrichtung wird als s-Polarisation bezeichnet, während die parallel zur Einfallsebene gerichtete Polarisationsrichtung die Bezeichnung p-Polarisation trägt.

Die vom Einfallswinkel abhängigen polarisationsabhängigen Reflexionskoeffizienten der s-Polarisation $r_s$ bzw. der p-Polarisation $r_p$ werden als Fresnelkoeffizienten der Reflexion bezeichnet. Sie sind durch die Fresnel-Formeln bestimmt:

$$r_p = \left[ \frac{\tan(i-j)}{\tan(i+j)} \right]^2 \quad r_s = \left[ \frac{\sin(i-j)}{\sin(i+j)} \right]^2$$

Dabei bezeichnen i und j gemäß der Darstellung aus Fig. 2b den Einfalls- bzw. den Brechungswinkel für die entsprechende Grenzfläche nach dem bekannten Brechungsgesetz. Für einen aus Luft erfolgenden normalen, d.h. senkrechten Lichteinfall auf die Grenzfläche vereinfachen sich das Fresnelkoeffizienten auf die von der Polarisationsrichtung des Lichtes unabhängige Beziehung:

$$r = \left[ \frac{n-1}{n+1} \right]^2 .$$

Fig. 2a zeigt die Reflexianskoeffizenten $r_s$ und $r_p$ in Prozent in Abhängigkeit vom Einfallswinkel in °. Es ist aus Fig. 2a zu entnehmen, dass $r_P$ bei einem Einfallswinkel zwischen 0 und 90° verschwindet. Bei diesem Einfallswinkel wird kein p-Polarisiertes Licht von der optischen Grenzfläche reflektiert. Dieser Einfallswinkel wird als Brewster-Winkel bezeichnet. Bei wegen der fehlenden p-polarisierten Komponente ist der reflektierte Strahl ausschließlich s-polarisiert. Der Brewster-Winkel $q_B$ gehorcht der Beziehung:

$$q_B = \arctan(n_2 / n_1)$$

Bei einem Einfall aus Luft ist $n_1 = 1$ und es gilt somit $q_B = \arctan(n_2)$. Eine einfache Erklärung für den Brewsterwinkel kann aus Fig. 2b entnommen werden. Bei einer Reflexion unter dem Brewsterwinkel stehen der von der Grenzfläche reflektierte Strahl und der innerhalb des optisch dichteren Mediums gebrochene Strahl senkrecht aufeinander, d.h. sie schließen einen Winkel von 90° ein. In diesem Fall schwingen die zur Einfallsebene parallelen Dipole an der Grenzfläche des optisch dichteren Mediums in Richtung des Reflexionswinkels und tragen entsprechend ihrer Strahlungscharakteristik keinerlei p-polarisierte Lichtkomponente zur reflektierten Lichtintensität bei, während die s-polarisierte Komponente einen endlichen Beitrag liefert.

Eine planparallele Platte, die so montiert ist, dass der einfallende Strahl im vorhergehend definierten Brewsterwinkel $q_B$ einfällt, wobei der einfallende und der gebrochene Strahl senkrecht aufeinander stehen, wird als Brewster-Fenster bezeichnet. In praktischen Anwendungen werden zusätzlich spezielle Beschichtungen auf die Grenzfläche des Brewsterfensters aufgebracht, die die Reflektivität der s-polarisierten Komponente auf einen Wert von bis zu 99% steigern. Unter diesen Bedingungen ist das reflektierte Licht vollständig s-polarisiert und das transmittierte Licht weist eine nahezu vollständige p-Polarisation auf.

In der erfindungsgemäßen Strahldämpfungseinheit I wird dieser Effekt zur stufenlosen Intensitätsregulierung des Laserstrahls genutzt. Entsprechend Fig. 1a besteht die Strahldämpfungseinheit I aus zwei optischen Fenstern 2 und 2b, die im Brewsterwinkel befestigt sind, und einem λ/2-Plättchen oder Retarder 1. Das zweite Brewsterfenster kompensiert dabei die durch das erste Brewsterfenster hervorgerufene Strahlversetzung. Der Retarder 1 bildet hierbei ein besonders wichtiges Element. Er besteht aus einem doppelbrechenden Kristall oder einer doppelbrechenden Folie, deren Dicke so ausgeführt ist, dass die Phasendifferenz zwischen einem ordentlichen und einem außerordentlichen Strahl exakt eine halbe Wellenlänge oder π beträgt. Ist nun der Winkel zwischen dem Vektor des elektrischen Feldes bzw. der Polarisationsebene eines einfallenden linear polarisierten Strahls und der Hauptfläche des Retarders θ, wird dessen Polarisationsebene unter dem Einfluss des um einen Winkel 2θ gedreht. Das heißt, dass durch eine Drehung des Retarders um 45° eine Drehung der Polarisationsebene des Laserstrahls um 90° und damit ein Wechsel von eine s- zu einer p-Polarisation oder umgekehrt bezüglich des nachfolgenden Brewster-Fensters bewirkt wird, wobei die durch das Brewsterfenster hindurchtretende p-polarisierte Komponente des Laserlichtes stufenlos in ihrer Intensität reguliert werden kann.

Alternativ zu dem λ/2-Plättchen kann auch eine Anordnung aus einem Paar unmittelbar aufeinanderfolgender und gleich orientierter λ/4-Plättchen anstelle des Retarders vorgesehen sein. Dabei wird der gleiche physikalische Effekt hervorgerufen. Eine optionale Anordnung eines Polarisationskristalls unmittelbar hinter dem Retarder bildet einen Strahlteiler für einfallendes monochromatisches linear polarisiertes Licht.

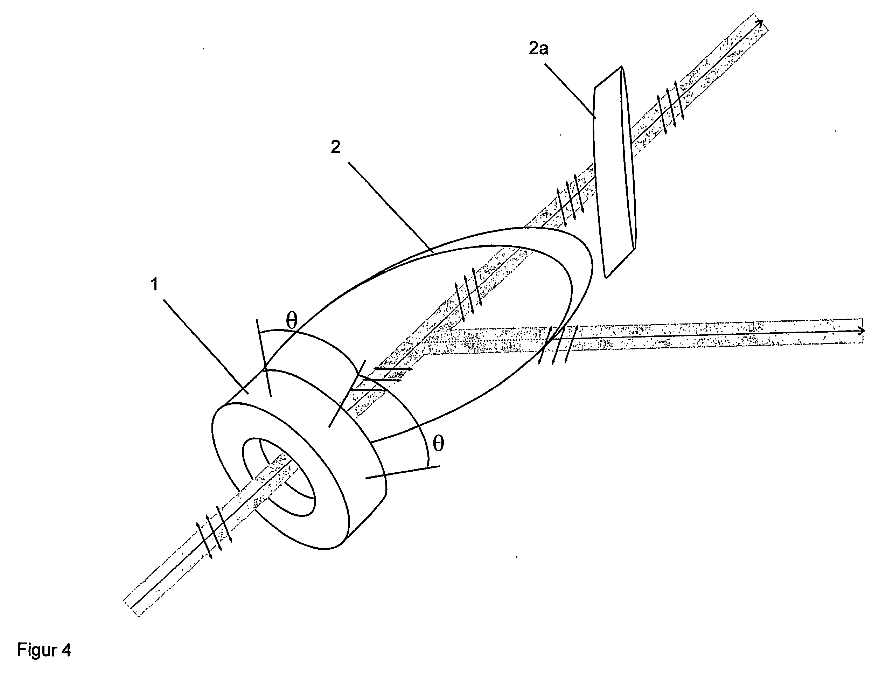

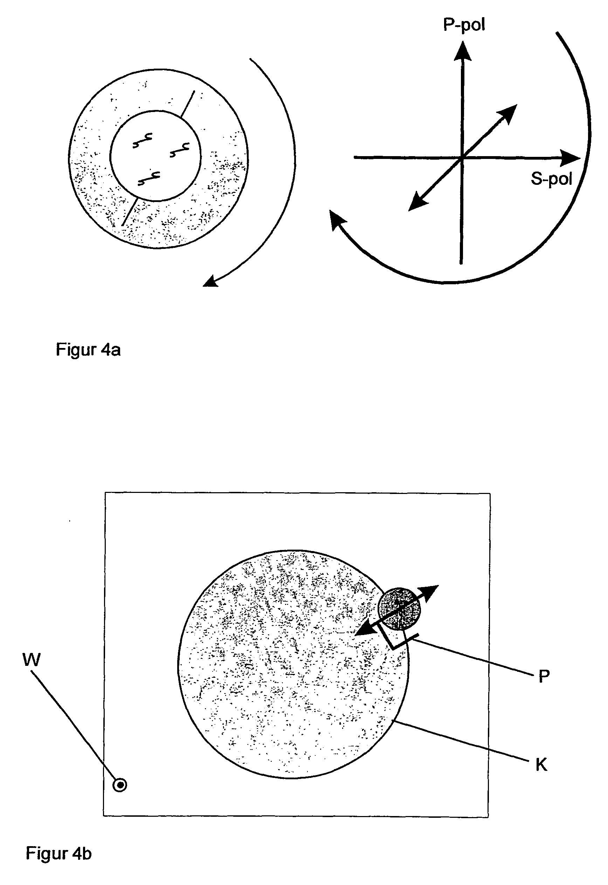

Die in Fig. 4 beispielhaft gezeigte Kombination des drehbaren Retarders 1 mit der nachfolgenden Anordnung aus erstem Brewsterfenster 2 und zweitem Brewsterfenster 2a bildet somit eine kontinuierliche Steuermöglichkeit für die Reflexion und Transmission des Laserlichtes aus und ermöglicht eine kontinuierliche Steuerung bzw. Dämpfung der Gesamtintensität des Strahls.

Es können sowohl der Retarder, als auch die Anordnung der Brewsterfenster drehbar ausgeführt werden. Zweckmäßig ist jedoch eine Anordnung, bei der sich die Brewsterfenster sich in einer fest montierten und unveränderlichen Position befinden, während die Steuerung der Polarisationsrichtung des Strahls und damit dessen Intensitätsregulierung nur durch den gedrehten Retarder ausgeführt wird. Dazu kann der Retarder durch eine Galvanometeranordnung bewegt werden. Die mit einer hohen Einstellgenauigkeit arbeitende Galvanometeranordnung kann ergänzend durch eine Software in einer Steuereinheit angesteuert werden, wobei die Rotation des Retarders auf der Grundlage einer großen Variabilität von Impulsmustern und Betriebsarten eingestellt werden kann. So sind insbesondere Ansteuerungen in einem Schrittbetrieb, einem linearen kontinuierlichen oder in einem nichtlinearen kontinuierlichen Betrieb möglich, wodurch die Intensität des Lasers in einer damit entsprechenden Weise verändert wird.

Die in Fig. 1b gezeigte Rotatoreinheit Ia schließt sich an die Strahldämpfungseinheit I an. In Fig. 4a ist deren grundlegende Komponente, ein λ/2-Plättchen, mit einer Skizze der durch eine Rotation des λ/2-Plättchens erreichbaren Drehung der Polarisationsebene gezeigt. Fig. 4b illustriert die Bedeutung der Lage der Polarisationsebene P bezüglich einer Bohr- oder Schneidkante K in einem Werkstück W.

Wie bereits in Verbindung mit dem Retarder 1 aus der Strahldämpfungseinheit I erwähnt, dreht ein λ/2-Plättchen, bzw. eine Kombination unmittelbar aufeinander folgender λ/4-Plättchen, die Polarisationsebene linear polarisierten Lichtes bei einer Drehung des Retarders um den Winkel θ in eine neue Richtung, die um den Winkel 2θ von der ursprünglichen Polarisationsrichtung abweicht. Während bei der erwähnten Strahldämpfungseinheit I diese Drehung der Polarisationsrichtung zur Intensitätsregulierung des Laserlichtes genutzt wird, dient das λ/2-Plättchen der Rotatoreinheit dafür, die Polarisationsrichtung des aus der Strahldämpfungseinheit austretenden Laserlichtes definiert zu ändern. Die Polarisationsrichtung des Laserlichtes und dessen linearer Polarisationszustand sind durch die feste mechanische Stellung der Brewsterfenster 2 und 2a in der Strahldämpfungseinheit eindeutig vorgegeben, sodass die Stellung des λ/2-Plättchen des Rotators Ia jederzeit mit einer eindeutigen Drehung der Polarisationsebene verknüpft ist, die extern, beispielsweise durch einen Stellmotor oder eine Galvanometerdrehung gesteuert werden kann.

Es hat sich in der Praxis des Laserschneidens bzw. -bohrens erwiesen, dass bei der Verwendung linear polarisierten Laserlichtes eine senkrecht zur Schneidkante K orientierte Polarisation P zu einer besonders hohen Qualität der Schneidkante führt. Durch eine externe Steuereinheit wird in Verbindung mit einer Steuer- und Gerätesoftware, beispielsweise InScript, nun die Stellung des λ/2-Plättchens im Rotator Ia so mit der zu erzeugenden Schneid- bzw. Bohrkontur abgestimmt, dass die Polarisationsrichtung P des Laserlichtes an jedem Punkt der zu schneidenden bzw. zu bohrenden Kontur senkrecht zur Schneidkante K orientiert ist. Mögliche Änderungen der Polarisationsrichtung des Laserlichtes durch die nachfolgenden optischen Komponenten des Scankopfes sind in der Regel unvermeidlich und müssen dabei natürlich berücksichtigt werden. Meist machen sie sich entweder durch einen konstanten oder linear proportionalen Offset des Polarisationswinkels bemerkbar, der problemlos bei der Rotatoransteuerung auskorrigiert werden kann.

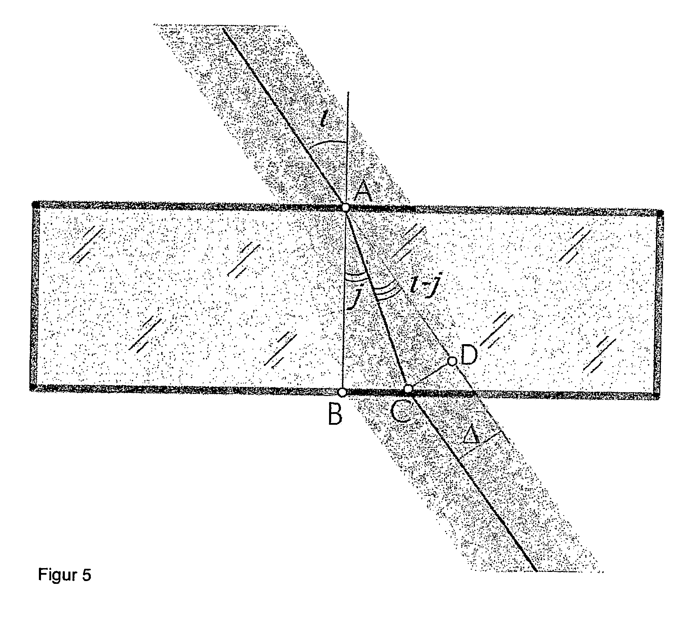

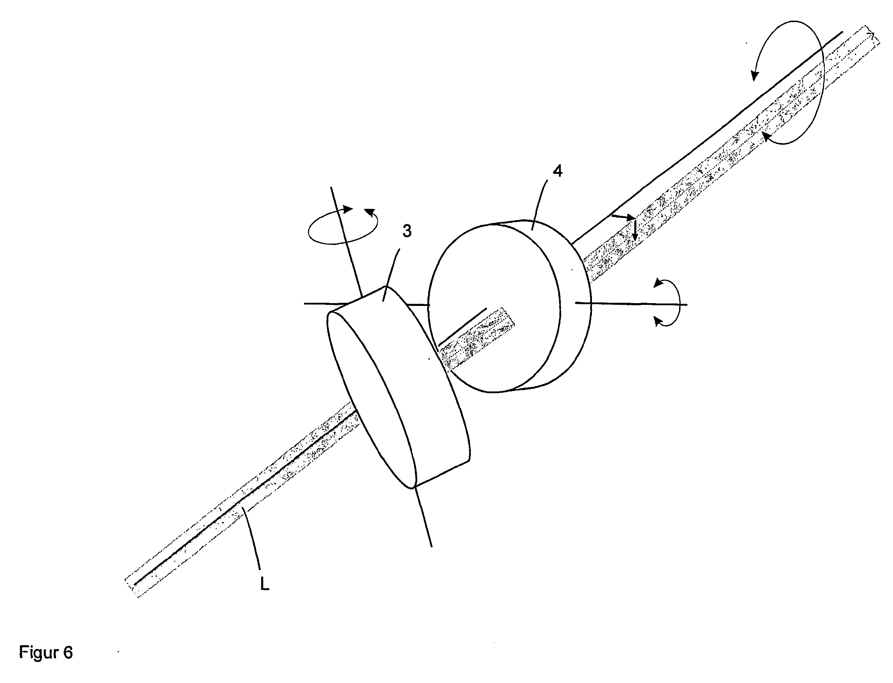

In Verbindung mit den Figuren 5 und 6 soll eine beispielhafte Taumeleinheit II näher erläutert werden. Fig. 5 zeigt dazu die Strahlausbreitung bzw. den parallelen Strahlversatz eines schräg in eine planparallele Platte einfallenden Strahls, Fig. 6 ein Ausführungsbeispiel einer erfindungsgemäßen Taumeleinheit.

Aus den Grundlagen der Optik ist bekannt, dass ein parallel zur optischen Achse einer Linse laufender Strahl immer in einem Brennpunkt gesammelt wird. Das gilt auch dann, wenn er parallel zur optischen Achse verschoben worden ist. In diesem letzten Fall schneidet der Strahl die optische Achse im Brennpunkt unter einem gewissen Winkel. Dieser schräge Lichteinfall im Brennpunkt hat sich als sehr nützlich beim Schneiden oder Bohren mit Laserlicht herausgestellt. Durch eine Veränderung des Schnittwinkels mit der optischen Achse kann die Geometrie des erzeugten Bohrloches bzw. der Schnittkante beeinflusst werden. Die Taumeleinheit dient dazu, die dafür notwendige zur optischen Achse parallele Strahlversetzung hervorzurufen.

Die Taumeleinheit setzt sich, wie in Fig. 1a und Fig. 6 gezeigt, aus zwei planparallelen optischen Gläsern 3 und 4 zusammen, die wiederum auf Galvanometeranordnungen befestigt sind. Fällt der Strahl L durch eine der beiden Platten unter einem gewissen Winkel ein, so ruft die Platte aufgrund der Lichtbrechung einen Strahlversatz parallel zu dessen Ausbreitungsrichtung hervor. Der Strahlversatz hängt vom Brechungsindex der Platte, der Dicke der Platte und dem Einfallswinkel des Strahls ab. Fig. 5 illustriert dies anhand einer Skizze. Der zu erwartende parallele Strahlversatz Δ kann aus folgender Beziehung bestimmt werden:

$$\Delta = \frac{d\sin(i-j)}{\cos(j)}$$

Hierbei ist i der Einfallswinkel des Strahls, j der sich aus dem Brechungsgesetz ergebende Brechungswinkel an der ersten Grenzfläche der Platte und d die Dicke der Platte.

Durch eine Drehung der Platte um einen gewissen Winkel kann somit der Strahlversatz beeinflusst und gesteuert werden. Für einen in zwei Richtungen zu erzeugenden Strahlversatz sind bei der hier gezeigten Ausführungsform zwei derartige Platten vorgesehen, die um zueinander orthogonale Achsen rotieren, bzw. gekippt werden können. Zweckmäßigerweise sind die beiden Drehachsen jeweils senkrecht zur Ausbreitungsrichtung des Laserstrahls L gerichtet. Damit kann der Strahl in zwei zueinander orthogonale Richtungen parallel zur optischen Achse bzw. zur anfänglichen Ausbreitungsrichtung versetzt werden. Prinzipiell können verschiedene Modi der Rotation bzw. der Verkippungen der beiden Platten vorgesehen werden. Ein von einer linearen Funktion abhängiges Verkippen der beiden Platten führt beispielsweise zu einem diagonalen Strahlversatz. Für einen besonders vorteilhaften Taumeleffekt ist es zweckmäßig, dass der Strahlversatz eine kreisförmige Bahn um die optische Achse beschreibt. Dazu wird eine Platte mit einem zeitlich veränderlichen Kippwinkel in Form einer Sinusfunktion und die andere Platte mit einer dazu phasenverschobenen Sinusfunktion gekippt, wobei dadurch die resultierende Strahlversetzung eine Lissajousfigur, insbesondere einen Kreis oder eine Ellipse um die optische Achse herum beschreibt. Änderungen der Kippamplituden bzw. der Phasenverschiebung ändern entsprechend den durch die Taumeleinheit erzeugten Strahlversatz und ihre Bahn um die optische Achse. Prinzipiell kann somit die gesamte Bandbreite an Lissajous-Figuren erzeugt werden.

Eine genauere Betrachtung zeigt, dass bei einem Verkippen der Platten in Abhängigkeit von einer Sinusfunktion bzw. einer Cosinusfunktion keine exakte Kreisbahn des dabei erzeugten Strahlversatzes erreicht wird. Die Abweichung beträgt etwa ein Prozent bei den verwendeten Kippwinkeln von etwa 18° und dies beeinflusst die Arbeitsergebnisse nur unwesentlich.

Die mit der beschriebenen Taumeleinheit praktisch erzeugbaren Strahlversetzungen liegen im Bereich von einigen Millimetern. Um den gewünschten Einfallswinkel im Focus der Probe zu erhalten, genügt diese Versetzung nicht und muss verstärkt werden. Dazu dient das Strahl-Expansions-Teleskop III.

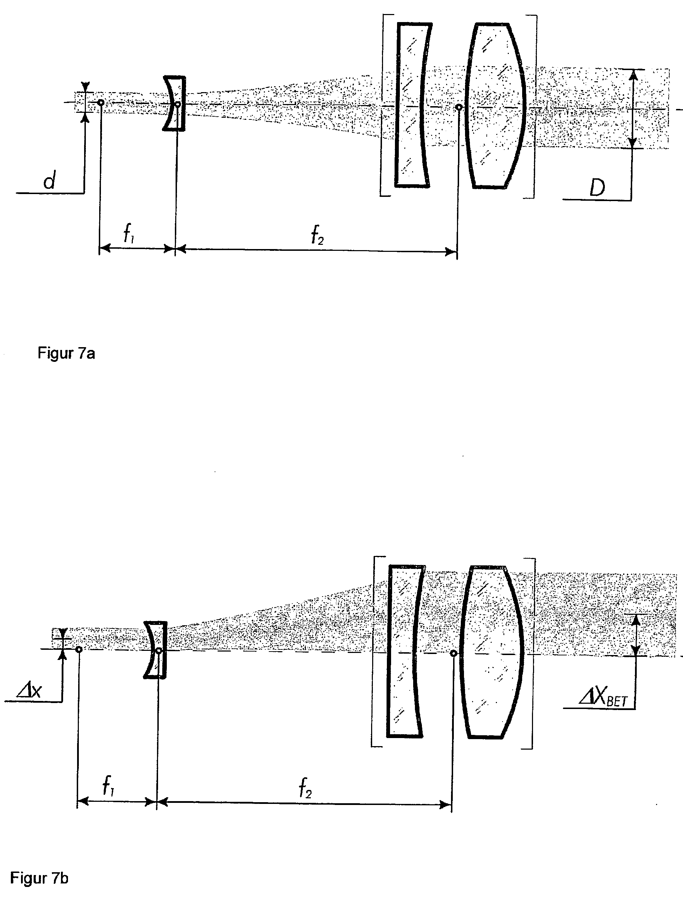

Die Fig. 7a und 7b stellen wesentliche optische Grundlagen des Strahl-Expansions-Teleskops III dar. Erfindungsgemäß werden aus Gründen des einfachen Aufbaus und der Leistungsfähigkeit refraktive Teleskopoptiken bevorzugt. Typische refraktive Teleskopoptiken sind aus zwei Linsen oder Linsengruppen zusammengesetzt.

Fig. 7a zeigt hierzu eine beispielhafte Ausführungsform einer Linsenanordnung. Die Linsengruppen sind in jedem Fall so angeordnet, dass die Brennweite der ersten Linsengruppe mit der Brennweite der zweiten Linsengruppe so übereinstimmt, dass die beiden Brennpunkte der Linsengruppen zusammenfallen. Wichtig ist in diesem Zusammenhang das Verhältnis M zwischen den Brennweiten der Linsengruppen. Die Strahlgröße $D_{BET}$ nach dem Verlassen des Teleskops ergibt sich hierbei durch die Beziehung

$$D_{BET} = M \cdot d = \frac{f_2}{f_1} \cdot d.$$

Hierbei sind $f_1$ bzw. $f_2$ die Brennweiten der Linsen bzw. Linsengruppen und d die Strahlgröße des Strahles vor dem Eintritt in das Teleskop. M ist somit gleichzeitig der Vergrößerungsfaktor des Teleskops.

Fig. 7a zeigt eine beispielhafte Ausführungsform. Die genaue Zahl der optischen Elemente, d.h. der Linsen und Linsengruppen, hängt von der Anwendung und der geforderten Leistungsfähigkeit des Teleskops ab. Zusätzliche Linsen können zur Korrektur optischer Aberrationen vorgesehen sein.

Der gleiche Vergrößerungsfaktor M kann durch eine Kombination aus zwei Konvexlinsen oder Linsengruppen mit positiven Brennweiten, d.h. einem Kepler-Teleskop, erreicht werden, oder durch eine Kombination aus einer Konvex- und einer Konkav-Linse, bzw. einer Linsengruppe mit positiver und einer mit negativer Brennweite, d.h. einem Gallilei-Teleskop, verwirklicht sein. Die Ausführungsform des Gallilei-Teleskops, d.h. die in Fig. 7a gezeigte Anordnung, wird hierbei aus Gründen der kürzeren Baulänge bevorzugt. Weiterhin wird bei einer solchen Ausführungsform ein zwischen den Linsengruppen gelegener Brennpunkt und somit ein durch den Laser induziertes Aufheizen und Durchbrechen der Luft vermieden.

Wie aus Fig. 7b hervorgeht, wird bei einem Vergrößerungsfaktor M des Teleskops die von der vorhergehend erläuterten Taumeleinheit erzeugte Strahlversetzung $\Delta x$ vor dem Teleskop in eine vergrößerte Strahlversetzung $\Delta X_{BET}$ umgesetzt. Es gilt somit

$$\Delta X_{BET} = M \cdot \Delta x.$$

Daher kann das Strahl-Expander-Teleskop als Verstärkereinheit für den von der Taumeleinheit erzeugten Strahlversatz angewendet werden.

Die Gesetzmäßigkeiten für die Ausbreitung eines Laserstrahls in einem optischen System zeigen, dass die Größe eines Brennflecks von den Eigenschaften des gesamten optischen Systems abhängt, wobei sowohl alle optischen Elemente, als auch deren Abstände zueinander einen gewissen Einfluss auf die sich herausbildende Größe des Brennflecks und dessen Position ausüben.

Insbesondere zeigt sich, dass sich die Größe des Brennflecks unter den Einflüssen der Beugungseffekte durch die endliche Apertur des Systems tendenziell verkleinert, sofern die Apertur vergrößert wird und sofern die optischen Aberrationen des Systems hinreichend korrigiert sind. Das heißt, dass die Verstärkung des Strahlversatzes des Laserstrahls nicht zwingend zu einer Vergrößerung des Brennflecks selbst führt, sodass nicht der Strahl aufgeweitet, sondern nur versetzt wird.

Die Größe des Brennflecks kann insbesondere auch durch kontrollierte Verschiebungen einer der Linsen bzw. Linsengruppen im Millimeterbereich entlang der Ausbreitungsrichtung des Laserstrahls beeinflusst werden, wodurch die numerische Apertur des Strahls verändert wird. Als Resultat verändert sich dabei die Strahlform, der Strahl ist in diesem Fall nicht mehr kollimiert. Damit geht eine Änderung der Z-Position des Brennflecks einher. Der Einfluss einer derartigen Verschiebung ist für jedes optische System verschieden. Mit einer softwareartigen Steuerung kann die Verschiebung der Komponenten des Teleskopsystems jedoch mit einer, vom optischen Layout abhängigen, Mikrometergenauigkeit ausgeführt und der daraus resultierende Effekt sehr genau überwacht werden.

Der so parallel zur optischen Achse versetzte Strahl trifft in den Scanblock und wird durch diesen entsprechend der auf der Probe zu erzeugenden Kontur abgelenkt.

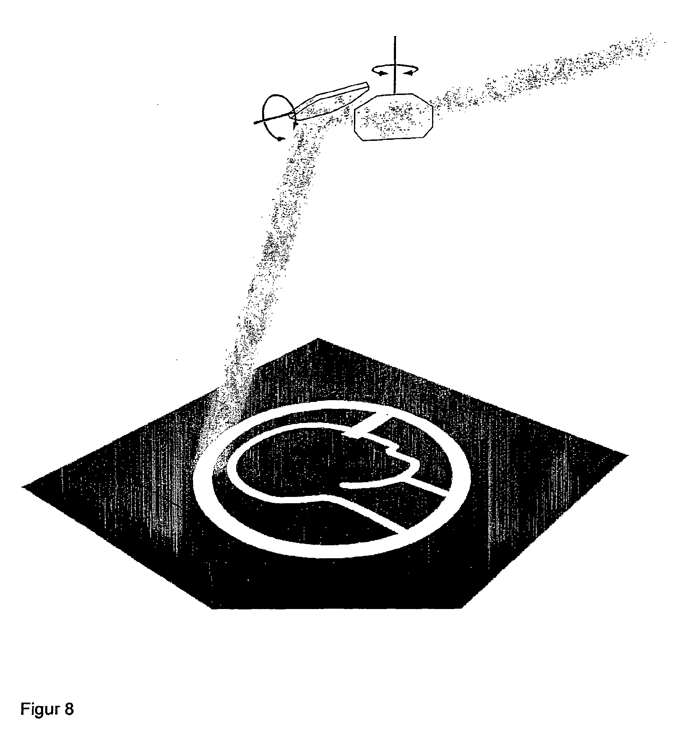

Fig. 8 zeigt eine beispielhafte Spiegelanordnung eines Scanblocks. Diese Einheit setzt sich aus zwei Spiegeln zusammen, die auf Galvanometereinheiten montiert sind. Dadurch wird eine Strahlablenkung möglich, die dazu führt, dass die gewünschte Kurve des Brennflecks auf die Oberfläche der Probe gezeichnet wird. Beim Bohren von Löchern ist diese Kurve in den meisten Fällen ein einfacher Kreis. Diese Bewegung während des Bohrens wird als Trepanieren bezeichnet und mit sehr hohen Geschwindigkeiten bzw. Rotationen pro Minute ausgeführt.

Jeder der Spiegel des Scanblocks wird mit einer Winkelgeschwindigkeit von 90°/s für Systeme mit kleiner Apertur bewegt. Dieser Winkelgeschwindigkeit entsprechen ca. 830 U/min. Die optische Strahlablenkung erreicht dabei beispielsweise maximal 50° und in Abhängigkeit von der verwendeten fokussierenden Optik kann der Strahl mit einer linearen Geschwindigkeit von einigen Kilometern je Sekunde bewegt werden.

Die Spiegel führen hierbei keine vollständige Kreisbewegung während des Scan-Vorgangs aus. Sie werden bei einem gewissen Kippwinkel gestoppt und setzen ihre Bewegung in die entgegengesetzte Richtung fort. Die Positionierungsgenauigkeit liegt hierbei im Bereich einiger Mikrometer, sofern die Spiegel ausreichend plan ausgeführt und mit hoher Genauigkeit in ihren Schwerpunkten aufgehängt und somit ausgewuchtet sind.

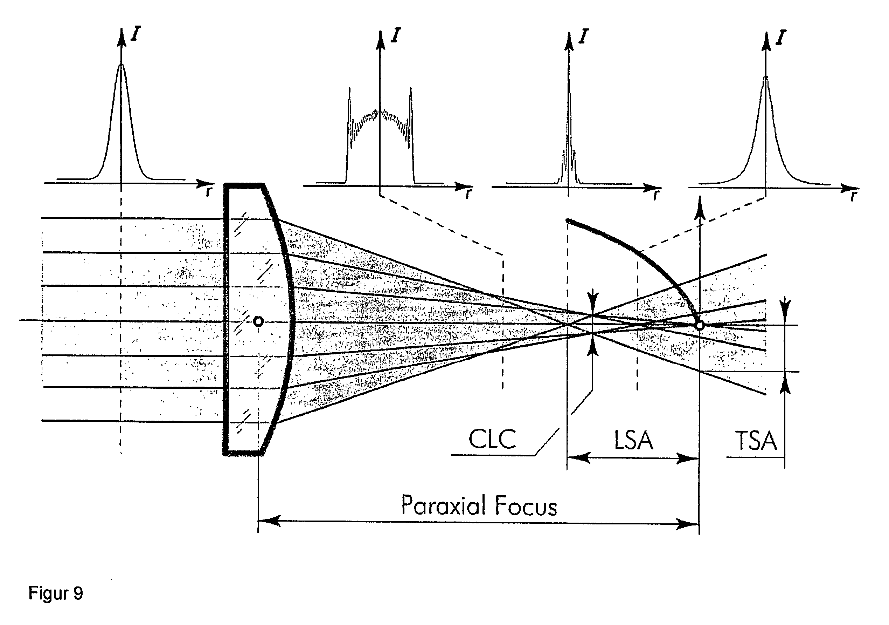

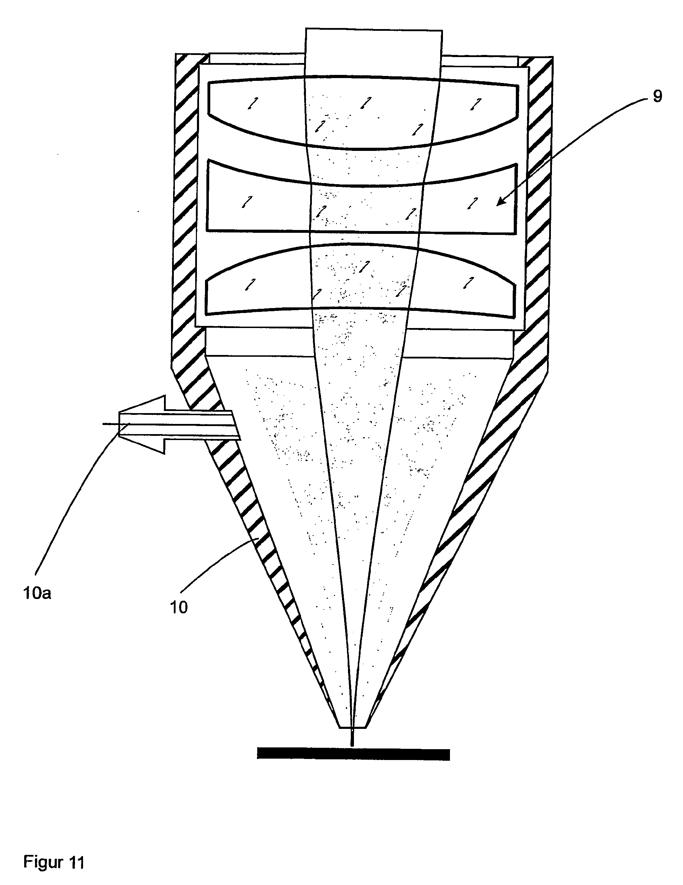

Fig. 9 zeigt eine beispielhafte sphärische Aberration zur näheren Erläuterung der Fokussierungsoptik 9 aus der Arbeitseinheit V aus Fig. 1a. Die Fokussierungsoptik ist weiterhin in Fig. 11 vergrößert dargestellt. Die Fokussierungsoptik dient der Konzentration der Laserleistung auf die zu behandelnde Probe. In Abhängigkeit vom Typ des Lasers kann hierbei die Strahlgröße des Lasers im Bereich von einem bis zu zehn Millimeter im Durchmesser sein. Die damit vorliegende Leistungsdichte reicht zur Behandlung der Probe noch nicht aus und wird durch die Fokussierungsoptik gesteigert. Hierbei ist die Fokussierungsoptik zur Korrektur einer Reihe von Abbildungsfehlern, insbesondere einer sphärischen Aberration bzw. einer Coma-Aberration ausgelegt.

Sphärische Aberration tritt bei einer zunehmenden Strahl-Apertur des optischen Systems auf. Hierbei werden die zur optischen Achse entfernten Strahlen an den Linsen stärker gebrochen, als die achsnäheren Strahlen. Beide Strahltypen weisen somit einen unterschiedlichen Brennpunkt auf. Die dabei auftretende Kaustik führt zu einer unerwünschten Vergrößerung der Größe des Brennflecks und zu einer Änderung der Intensitäts- und Energieverteilung I über dem Strahlquerschnitt in Abhängigkeit von der Position auf der optischen Achse, wie aus den Diagrammen in der Figur hervorgeht. Dieser Effekt ist unerwünscht und wird durch die Fokussierungoptik unterdrückt.

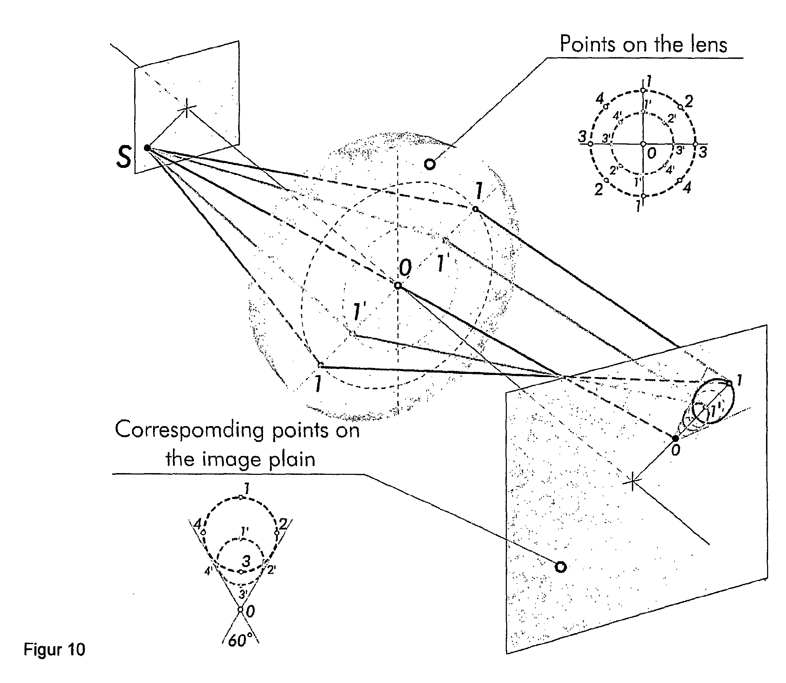

Durch die vorhergehend erwähnte Taumeleinheit und den erzeugten Strahlversatz muss die Fokussierungsoptik für eine Korrektur der Coma-Aberration ausgeführt sein. Diese Art Abbildungsfehler ergibt sich dann, wenn der Strahl in einem Winkel zur optischen Achse auf die Linse trifft oder das Objekt sich außerhalb der optischen Achse befindet. Bei sphärischen Linsen weisen verschiedene Abschnitte der Linsenoberfläche verschiedene Vergrößerungsfaktoren auf. Wie aus Fig. 10 zu entnehmen ist, bildet jede konzentrische Zone der Linse ein ringförmiges Bild aus, das Coma-Kreis genannt wird. Ein Objektpunkt außerhalb der optischen Achse ist dann keine scharf abgebildete Ecke oder Kante mehr, sondern erscheint als von einem kometenartigen Schweif umgeben.

Die vorhergehend dargestellten Einheiten bilden jeweils separate Module des Scankopfes, wobei jedes Modul mit einer Steuereinrichtung verbunden ist. Diese Steuereinrichtung bildet eine Schnittstelle, die einen Datenaustausch zwischen den Gerätekomponenten des Scankopfes und einer Steuersoftware, beispielsweise InScript, abwickelt.

Nachfolgend werden einige ergänzende Prüf- und Kontrolleinheiten näher erläutert. Fig. 11 zeigt in diesem Zusammenhang neben der bereits erwähnten Fokussierungsoptik 9 eine Gasdüse 10 mit einer Gaszuführung 10a. Diese Vorrichtung dient zum Zuführen eines Hilfsgases zum bearbeiteten Gebiet. Das Gas kann hierbei in Abhängigkeit von der Anwendung und von den Eigenschaften des Gases selbst, die Funktion eines Schutzgases zum Verhindern einer Oxydation sein. Zweckmäßigerweise ist die Gasdüse mit einem Druckventil ausgestattet, das von einer Software einer Steuereinrichtung gesteuert wird. Damit kann der Gasdruck während der Materialbearbeitung gesteuert werden, wobei das Ergebnis des Bearbeitungsvorgangs mit einer großen Bandbreite beeinflusst werden kann. Das gesamte Modul kann für eine Druckbeständigkeit von bis zu 10 Bar ausgelegt werden.

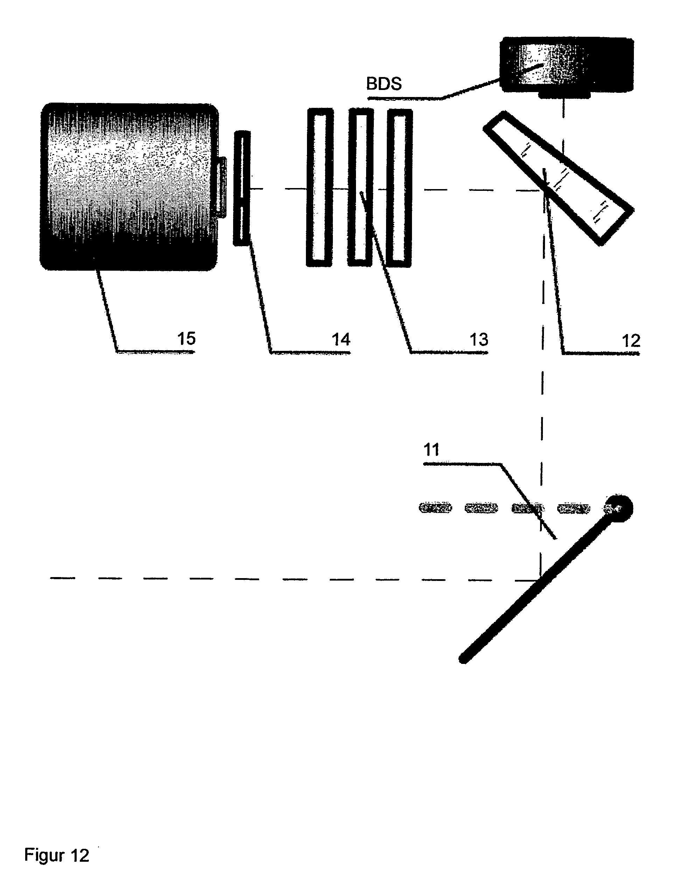

Fig. 12 zeigt eine beispielhafte Strahlprofil-Einheit VI. Wie aus Fig. 1a zu entnehmen ist, kann diese Prüf- und Kontrolleinheit der gesamten Vorrichtung des Scankopfes vorgeschaltet sein. Die beispielhafte Ausführungsform besteht aus einem mechanischen Verschluss 11, zusätzlichen optischen Elementen zur Strahlabschwächung und -umlenkung und einer CCD-Kamera 15 zur Beobachtung des Laserstrahls. Diese ist mit einem Interferenzfilter 14 und einer Reihe von Absorptionsfiltern 13 ausgestattet.

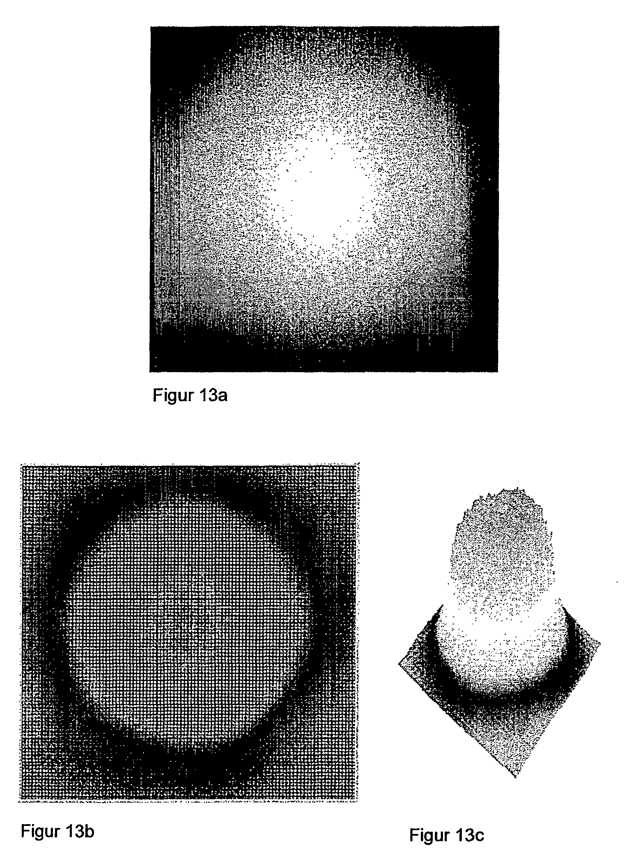

Bei einem geschlossenen Verschluss 11 tritt der Strahl in die Strahlprofil-Einheit ein. Ist der Verschluss geöffnet, gelangt er in die vorhergehend beschriebenen Einheiten des Scankopfes. Zur Umlenkung des Lasers innerhalb der Strahlprofil-Einheit VI dient eine Keilplatte 12. Die Keilform verhindert hierbei ein Geisterbild von der Rückseite der Platte auf dem CCD-Array der Kamera. Die Absorptionsfilter 13, die eine Kaskade bilden können, reduzieren die Stärke des Laserstrahls und verhindern eine Beschädigung der Kamera 15. Der Interferenzfilter 14 ist nur für die Arbeitswellenlänge des Lasers durchlässig und reduziert die Hintergrundstrahlung auf ein Minimum. Der Blindverschluss BDS auf der Rückseite der Keilplatte 12 absorbiert die durch die Keilplatte laufende und an deren Rückseite austretende Strahlung. Er kann gegebenenfalls, insbesondere bei hohen Leistungsdichten des Lasers, gekühlt sein. Die auf dem CCD-Array der Kamera 15 registrierte Strahlung kann nachfolgend unter Verwendung einer Auswertungssoftware näher hinsichtlich mehrerer Merkmale, insbesondere Intensität, Strahlstärke, Symmetrie, ausgewertet werden. Die Figuren 13a bis 13c zeigen diesbezügliche Beispiele. Fig. 13a stellt hierbei das durch den Laser auf dem CCD-Array erzeugte Rohbild dar, während die Figuren 13b und 13c verschiedene Darstellungsformen der durch die Kamera registrierten Energieverteilungen des Lasers über dem Strahlquerschnitt in Form eines flächenhaften Bildes oder einer simulierten räumlichen Darstellung zeigen.

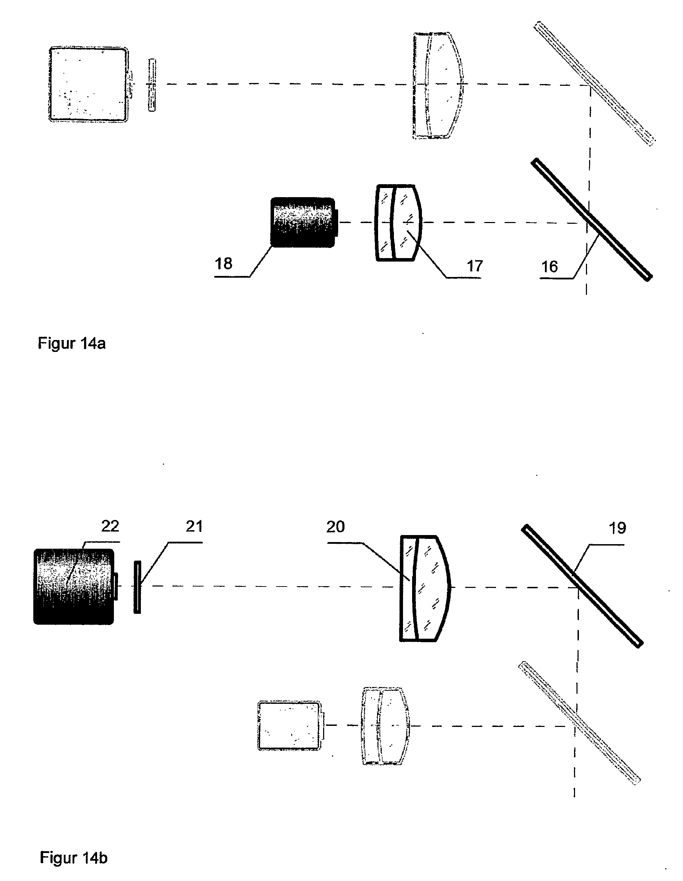

Fig. 14a zeigt eine beispielhafte Plasmasensor-Einheit VII. Die Aufgabe dieses Moduls besteht darin, Informationen über die Plasmabildung und -struktur bereit zu stellen. Das Plasma bildet sich üblicherweise während der Materialbearbeitung mit Laserstrahlung. Auf der Grundlage der durch die Plasmasensor-Einheit gesammelten Daten können Aufschlüsse über die Art und Weise einer zweckmäßigen und optimierten Werkstoffbearbeitung gewonnen werden. Das Hauptelement dieses Moduls ist der Plasmasensor 18, der als ein kommerziell erhältliches OEM-Gerät komplett mit der notwendigen Optik und Filtereinrichtungen ausgebildet sein kann. Zur Zuführung des Lichtes an den Plasmasensor dient ein in Fig. 1a und Fig. 1b dargestellter Strahlteiler 7, ein halbdurchlässiger Spiegel 16 und eine Koppeloptik 17.

Der Strahlteiler 7 weist beidseitig eine hoch antireflektive Beschichtung für die Arbeitswellenlänge auf und ermöglicht somit eine verlustarme Transmission des Laserlichtes. Die zur behandelten Probe gerichtete Seite des Strahlteilers weist eine reflektierende Beschichtung für das sichtbare Wellenlängenspektrum auf. Das Laserlicht durchdringt somit den Strahlteiler 7 im wesentlichen ungehindert, während das von der Probenoberfläche und aus dem Plasma stammende sichtbare Licht reflektiert und somit in Richtung der Plasmasensor-Einheit und der Sichteinheit geleitet wird. Der halbdurchlässige Spiegel 16 leitet dieses Licht zur Sichteinheit und lenkt einen Teil zum Plasmasensor 18 um. Die Koppeloptik 17 bündelt dieses Licht und richtet es auf den Plasmasensor 18 aus.

Zur Verfolgung und Überwachung des Bohr- und Schneidprozesses kann bei einer hier nicht dargestellten Ausführungsform auch eine Photodiode eingesetzt werden, die auf der anderen Seite des Werkstückes angeordnet ist. Die Photodiode detektiert die Laserstrahlung und signalisiert somit einen erfolgreichen und vollständigen Abschluss des Bearbeitungsvorgangs, d.h. ein vollständig gebohrtes Loch oder einen vollständig abgetrennten Teil des Werkstücks. Das von der Photodiode gelieferte Signal kann mit der Steuerungssoftware des Scankopfes gekoppelt werden und eine Einstellmechanik oder Einstelloptik des Scankopfes ansprechen, um zu einer nächsten Bohr- oder Schneidposition zu springen und dort einen neuen Bearbeitungsvorgang zu beginnen. Dabei können jedoch in der Regel keine zusätzlichen Informationen über die Wechselwirkung des Lasers mit dem bearbeiteten Werkstoff gewonnen werden.

Fig. 14b zeigt eine beispielhafte Sichteinheit VIII, die zu einem präzisen Einrichten des Scankopfes und einem Betrachten des bearbeiteten Gebietes während der Bearbeitung dient. Dieses Modul ist für eine Bildwiedergabe der Arbeitsfläche auf einer CCD-Kamera ausgelegt. Das Modul besteht nach Fig. 14b insbesondere aus folgenden Teilen:

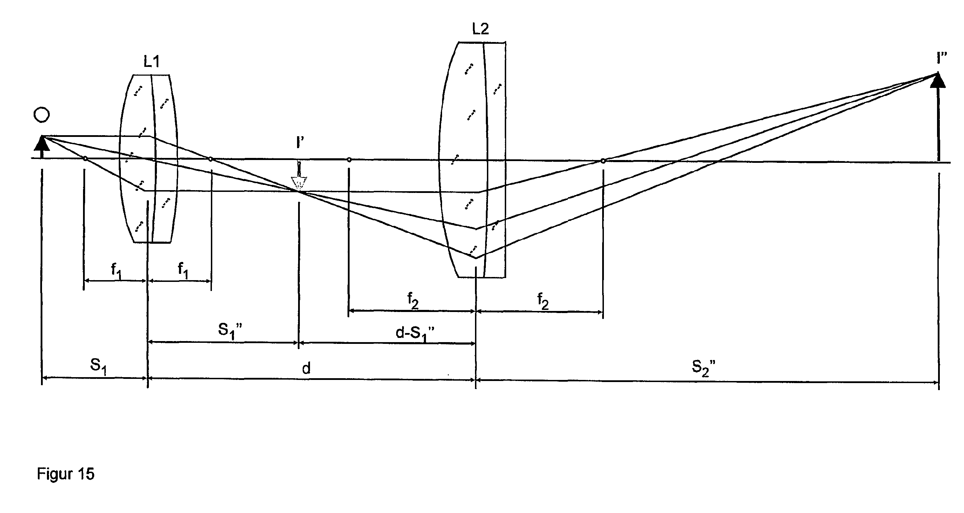

einer CCD-Kamera 22, einer bildgebenden Linse 20, einem Filter 21 und einem Strahlteiler 19. Die Linse 20 bildet eine Projektionseinheit in Verbindung mit der fokussierenden Optik 9 des Scankopfes. Die Linsen und deren zusätzlichen Beschichtungen sind in der Regel nicht für eine optische Abbildung im sichtbaren Wellenlängenbereich, sondern zum Führen und Fokussieren eines Lasers einer höheren Leistungsklasse optimiert. Zur näheren Erläuterung dient Fig. 15.

In Fig. 15 ist eine vereinfachte schematische Linsenanordnung aus zwei Linseneinheiten L1 und L2 gezeigt. Die grundlegende Beziehung für eine Bildprojektion ergibt sich aus der Abbildungsgleichung für Linsen. Sie lautet:

$$\frac{1}{f} = \frac{1}{s} + \frac{1}{s''}$$

Dabei ist f die Brennweite des optischen Systems, s der Abstand zwischen dem Objekt und dem optischen System und s'' der Abstand zwischen optischem System und Bild. Für die erste Linse L1 bzw. die zweite Linse L2 kann somit geschrieben werden:

$$\frac{1}{f_1} = \frac{1}{s_1} + \frac{1}{s_1''} \quad \text{bzw.} \quad \frac{1}{f_2} = \frac{1}{s_2} + \frac{1}{s_2''}.$$

Sofern das Bild der ersten Linse das Objekt der zweiten Linse ist, kann $s_2 = d - s_1''$ angenommen werden, wobei sich unter Verwendung der genannten Abbildungsgleichungen ergibt:

$$s_2'' = \frac{(d - s_1'')f_2}{(d - s_1'' - f_2)} = \frac{f_2 d - (f_2 s_1 f_1 / (s_1 - f_1))}{d - f_2 - (s_1 f_1 / (s_1 - f_1))}.$$

Diese Gleichung beschreibt die Bildposition nach der zweiten Linse. Die Gesamtvergrößerung der Systems berechnet sich zu $M_t = M_1 M_2$, wobei:

$$M_1 = \frac{f_1}{s_1 - f_1}$$

der Vergrößerungsfaktor der ersten Linse und

$$M_2 = \frac{f_2}{s_2 - f_2}$$

der Vergrößerungsfaktor der zweiten Linse ist.

Damit ergibt sich als Gesamtvergrößerung $M_t$ somit durch

$$M_t = \frac{f_1 f_2}{(s_1 - f_1)(d - f_2 - s_1 f_1 / (s_1 - f_1))}.$$

Diese Parameter beschreiben das Abbildungssystem vollständig. Obwohl diese Beziehungen für ideale Linsen gelten, sind sie für reelle Komponenten ohne wieteres mit sehr guter Näherung anwendbar. Als gewöhnliche Werte können $f_1 \approx 120\text{mm}$, $f_2 \approx 200\text{mm}$ und $d \approx 500\text{mm}$ angenommen werden. Die Brennweite des zweiten Elementes wird mit 200mm als Kompromiss zwischen der Länge und der Vergrößerung des Systems angenommen. Als Objekt kann die Spitze der oben beschriebenen Gasdüse angenommen werden, die einen Durchmesser von ungefähr 1mm aufweist.

11

Der Abstand zwischen der ersten Linse und dem Objekt ist etwas größer als die Brennweite und kann mit etwa $s_1 \approx 121mm$ angenommen werden. Damit beträgt die Gesamtvergrößerung des optischen Systems nach der oben genannten Formel $M_t \approx -1.73$, wobei die Bildposition bezüglich der letzten Linse bei $s_2'' \approx 202.8mm$ liegt.

Obwohl der erfindungsgemäße Scankopf anhand eines Ausführungsbeispiels dargestellt wurde, ist die Gestaltung des Scankopfes nicht auf dieses Ausführungsbeispiel beschränkt. Es können im Rahmen fachmännischen Handelns Hinzufügungen, Neukombinationen, Weglassungen und andere Abänderungen erfolgen, ohne den erfindungsgemäßen Gegenstand zu verlassen. Weitere Ausführungsformen ergeben sich auch den Unteransprüchen.

Bezugszeichenliste

| | |
|---|---|
| I | Strahldämpfungseinheit |
| 1 | Retarder |
| 2 | erstes Brewsterfenster |
| 2a | zweites Brewsterfenster |

| | |
|---|---|
| Ia | Rotatoreinheit |

| | |
|---|---|
| 2b | $\lambda/2$-Plättchen |

| | |
|---|---|
| II | Taumeleinheit |
| 3 | erstes optisches Fenster |
| 4 | zweites optisches Fenster |

| | |
|---|---|
| III | Strahl-Expander-Teleskop |
| 5 | Z-Übersetzer, Konkavlinse |
| 6 | Kollimationslinse, Konvexlinsenanordnung |

| | |
|---|---|
| IV | Scanblock |

| | |
|---|---|
| 8 | Spiegel |

| | |
|---|---|
| V | Arbeitseinheit |
| 9 | Fokussieroptik |
| 10 | Gasdüse |

| | |
|---|---|
| VI | Strahlprofil-Einheit |
| 11 | mechanischer Verschluss |
| 12 | Keilplatte |
| 13 | Filter, Filterkaskade |
| 14 | Interferenzfilter |
| 15 | CCD-Kamera |

| | |
|---|---|
| VII | Plasmadetektor-Einheit |
| 7 | Strahlteiler |
| 16 | halbdurchlässiger Spiegel |
| 17 | Koppeloptik |
| 18 | Plasmadetektor |

| | |
|---|---|
| VIII | Sichtsystem |
| 7 | Strahlteiler |
| 19 | Spiegel |
| 20 | Projektionsoptik |
| 21 | Filter |
| 22 | CCD-Kamera |

**Patentansprüche**

1. Scankopf als Teil einer Laser Bohr- und Schneideinrichtung, umfassend eine in den Lichtweg des Lasers angeordnete Reihe folgender Komponenten:

   eine intensitätsregulierende Strahldämpfungseinheit (I), ein den Strahlquerschnitt des Lasers vergrößerndes Strahl-Expander-Teleskop (III), einen den Focus des Laserstrahls führenden Scanblock (IV) und eine den Laserstrahl auf die Probe fokussierende Arbeitseinheit (V) sowie optional in den Lichtweg einkppoelbare zusätzliche Prüf- und Kontrolleinheiten, **dadurch gekennzeichnet, daß** in Verbindung mit der Strahldämpfungseinheit eine eine parallele Strahlversetzung regulierende Taumeleinheit (II) vorgesehen ist.

2. Scankopf nach Anspruch 1,
   **dadurch gekennzeichnet, dass**
   die Strahldämpfungseinheit (I) eine in dem Lichtweg angeordneten Folge aus einem $\lambda$/2-Plättchen bzw. Retarder (1), einem ersten Brewster-Fenster (2) und einem zweiten Brewster-Fenster (2a) enthält, wobei der Retarder und/oder mindestens eines der beiden Brewster-Fenster um die optische Achse drehbar ausgeführt sind.

3. Scankopf nach Anspruch 2,
   **dadurch gekennzeichnet, dass**
   eine den Retarder (1) um die optische Achse drehende Galvanometereinheit vorgesehen ist.

4. Scankopf nach einem der vorhergehenden Ansprüche,
   **dadurch gekennzeichnet, dass**
   bei einer Ausführungsform zwischen der Strahldämpfungseinheit (I) und der Taumeleinheit (II) eine die Polarisationsrichtung der Laserstrahlung drehende Rotatoreinheit (Ia) eingefügt ist.

5. Scankopf nach Anspruch 4,
   **dadurch gekennzeichnet, dass**
   die Rotatoreinheit (Ia) ein $\lambda$/2-Plättchen (2b) mit einem extern einstellbaren Einstellwinkel aufweist.

6. Scankopf nach einem der Ansprüche 4 oder 5,
   **dadurch gekennzeichnet, dass**
   der Einstellwinkel des $\lambda$/2-Plättchens einer im wesentlichen bezüglich einer Schnittfugenflanke lokal senkrecht gerichteten linearen Polarisationsrichtung des Laserstrahls entspricht.

7. Scankopf nach einem der Ansprüche 4 bis 6,
   **gekennzeichnet durch**
   eine den Einstellwinkel des $\lambda$/2-Plättchens in Abhängigkeit von einer vorgegeben Schnittfugenkontur verändernden Steuereinheit in Verbindung mit einer mechanischen Einstelleinheit.

8. Scankopf nach einem der vorhergehenden Ansprüche,
   **dadurch gekennzeichnet, dass**
   die Taumeleinheit (II) aus einer in den Lichtweg eingebrachten Anordnung aus zwei planparallelen Fenstern (3, 4) ausgebildet ist, wobei die Drehachse des ersten planparallelen Fensters (3), die Drehachse des zweiten planparallelen Fensters (4) und die Ausbreitungsrichtung des Laserstrahls orthogonal zueinander sind.

9. Scankopf nach Anspruch 8,
   **dadurch gekennzeichnet, dass**
   die planparallelen Fenster (3, 4) um ihre jeweiligen Drehachsen drehende Galvanometereinheiten vorgesehen sind.

10. Scankopf nach einem der vorhergehenden Ansprüche,
    **dadurch gekennzeichnet, dass**
    das Strahl-Expander-Teleskop (III) als eine refraktive strahlaufweitende Linsenanordnung ausgebildet ist.

11. Scankopf nach Anspruch 10,
    **dadurch gekennzeichnet, dass**
    das Strahl-Expander-Teleskop (III) als ein Gallilei-Teleskop mit mindestens einer Konkav-Linse (5) und mindestens einer konvexen Kollimationslinsen-Anordnung (6) ausgebildet ist.

**12.** Scankopf nach Anspruch 11,
**dadurch gekennzeichnet, dass**
die optische Anordnung des Strahl-Expander-Teleskops (III) eine zusätzliche aberrationskorrigierende Linsenanordnung aufweist.

**13.** Scankopf nach einem der Ansprüche 10 bis 12,
**dadurch gekennzeichnet, dass**
die Konkav-Linse (5) und/oder die Kollimationslinsen-Anordnung (6) entlang der optischen Achse verschiebbar gelagert ist.

**14.** Scankopf nach einem der vorhergehenden Ansprüche,
**dadurch gekennzeichnet, dass**
der Scanblock (IV) als eine Anordnung aus zwei rotierenden Einzelspiegeln (8, 8a) ausgebildet ist.

**15.** Scankopf nach Anspruch 14,
**dadurch gekennzeichnet, dass**
die Einzelspiegel (8, 8a) auf Rotationseinrichtungen für Winkelgeschwindigkeiten im Bereich von 90 rad/s und mehr angeordnet sind.

**16.** Scankopf nach einem der vorhergehenden Ansprüche,
**dadurch gekennzeichnet, dass**
die Arbeitseinheit (V) in Form einer Kombination aus einer Fokussierungsoptik (9) und einer Gasdüse (10) ausgebildet ist.

**17.** Scankopf nach Anspruch 16,
**dadurch gekennzeichnet, dass**
die Fokussierungsoptik (9) optische Korrekturelemente mindestens zum Ausgleich einer sphärischen Aberration und/oder einer Coma-Aberration aufweist.

**18.** Scankopf nach einem der Ansprüche 16 oder 17,
**dadurch gekennzeichnet, dass**
die Gasdüse (10) eine Gaszuführung mit einem programmgesteuerten Druckventil aufweist.

**19.** Scankopf nach Anspruch 1,
**dadurch gekennzeichnet, dass**
als zusätzliche Prüf- und Kontrolleinheit eine Strahl-Profil-Einheit (VI) mit Komponenten zu einem wahlweisen Einkoppeln der Strahl-Profil-Einheit in den Lichtweg, verschiedenen Filtereinrichtungen und einer das Strahlprofil detektierenden Kameraeinrichtung vorgesehen ist.

**20.** Scankopf nach Anspruch 19,
**dadurch gekennzeichnet, dass**
die Komponente zum wahlweisen Einkoppeln durch einen mechanischen Verschluss (11), insbesondere in Form eines einklappbaren Spiegels oder Prismas ausgebildet ist.

**21.** Scankopf nach einem der Ansprüche 19 oder 20,
**dadurch gekennzeichnet, dass**
eine erste Filtereinrichtung in der Strahl-Profileinheit (VI) durch eine, ein Doppelbild vermeidende Keilplatte (12) in Verbindung mit einem Blindverschluss (BDS) ausgebildet ist.

**22.** Scankopf nach einem der Ansprüche 19 bis 21,
**dadurch gekennzeichnet, dass**
eine weitere Filtereinrichtung in der Strahl-Profileinheit (VI) durch eine intensitätsmindernde Absorptionsfilteranordnung, insbesondere eine Absorptionsfilterkaskade (13) ausgebildet ist.

**23.** Scankopf nach einem der Ansprüche 19 bis 22,
**dadurch gekennzeichnet, dass**
eine weitere Filtereinrichtung in Form eines für eine gegebene Arbeitswellenlänge durchlässigen Interferenzfilters (14) vorgesehen ist.

**24.** Scankopf nach einem der Ansprüche 19 bis 23,
**dadurch gekennzeichnet, dass**
die Kameraeinrichtung durch eine CCD-Kamera (15) in Verbindung mit einer Bildverarbeitungssoftware ausgebildet ist.

**25.** Scankopf nach Anspruch 19,
**dadurch gekennzeichnet, dass**
als zusätzliche Prüf- und Kontrolleinheit weiterhin eine, eine Plasmabildung und -struktur registrierende Plasmadetektor-Einheit (VII) vorgesehen ist.

**26.** Scankopf nach Anspruch 25,
**dadurch gekennzeichnet, dass**
die Plasmadetektor-Einheit (VII) einen halbdurchlässigen Spiegel (16), eine Koppeloptik (17) und einen Plasmadetektor (18) aufweist.

**27.** Scankopf nach Anspruch 19,
**dadurch gekennzeichnet, dass**
als zusätzliche Prüf- und Kontrolleinheit eine Sichteinheit (VIII) zum visuellen Betrachten des Focus vorgesehen ist.

**28.** Scankopf nach Anspruch 27,
**dadurch gekennzeichnet, dass**
die Sichteinheit (VIII) eine mit der Fokussierungsoptik (9) zusammen wirkende Projektionsoptik (20), eine Filtereinrichtung (21) und eine Kameraeinrichtung, insbesondere eine CCD-Kameraeinrichtung (22) aufweist.

## Claims

**1.** A scan head as part of a laser drilling and cutting device, comprising a number of the following components which are arranged in the light path of the laser:

an intensity-regulating beam attenuation unit (I), a beam expander telescope (III) which increases the beam cross-section of the laser, a scan block (IV) which guides the focus of the laser beam, and a working unit (V) which focuses the laser beam onto the sample, as well as additional test and inspection units which may optionally be coupled into the light path, **characterised in that** in combination with the beam attenuation unit a wobble unit (II) which regulates a parallel beam displacement is provided.

**2.** The scan head according to Claim 1,
**characterised in that**
the beam attenuation unit (I) includes a series of a half-wave ($\lambda$/2) plate or a retarder (1), respectively, a first Brewster window (2), and a second Brewster window (2a), which is arranged in the light path, with the retarder and/or at least one of the two Brewster windows being adapted so as to be rotatable about the optical axis.

**3.** The scan head according to Claim 2,
**characterised in that**
a galvanometer unit is provided which rotates the retarder (1) about the optical axis.

**4.** The scan head according to one of the previous claims,
**characterised in that**
in an embodiment, a rotator unit (Ia) which rotates the polarisation direction of the laser radiation is inserted between the beam attenation unit (I) and the wobble unit (II).

**5.** The scan head according to Claim 4,
**characterised in that**
the rotator unit (Ia) comprises a half-wave plate (2b) with an externally adjustable setting angle.

**6.** The scan head according to one of Claims 4 or 5,
**characterised in that**
the setting angle of the half-wave plate corresponds to a linear polarisation direction of the laser beam, which is essentially locally perpendicularly directed with respect to a kerf edge.

7. The scan head according to one of Claims 4 to 6,
**characterised by**
a control unit which changes the setting angle of the half-wave plate as a function of a predetermined kerf contour in combination with a mechanical adjusting unit.

8. The scan head according to one of the previous claims,
**characterised in that**
the wobble unit (II) is formed by an arrangement of two plane-parallel windows (3, 4), which is inserted in the light path, with the axis of rotation of the first plane-parallel window (3), the axis of rotation of the second plane-parallel window (4), and the propagation direction of the laser beam being orthogonally to each other.

9. The scan head according to Claim 8,
**characterised in that**
galvanometer units are provided for the rotation of the plane-parallel windows (3, 4) about their respective axes of rotation.

10. The scan head according to one of the previous claims,
**characterised in that**
the beam expander telescope (III) is designed as a refractive beam expanding lens arrangement.

11. The scan head according to Claim 10,
**characterised in that**
the beam expander telescope (III) is designed as a Galilei telescope with at least one concave lens (5) and at least one convex collimation lens arrangement (6).

12. The scan head according to Claim 11,
**characterised in that**
the optical arrangement of the beam expander telescope (III) comprises an additional aberration-correcting lens arrangement.

13. The scan head according to one of Claims 10 to 12,
**characterised in that**
the concave lens (5) and/or the collimation lens arrangement (6) is/are displaceably supported along the optical axis.

14. The scan head according to one of the previous claims,
**characterised in that**
the scan block (IV) is designed as an arrangement comprising two rotating individual mirrors (8, 8a).

15. The scan head according to Claim 14,
**characterised in that**
the individual mirrors (8, 8a) are arranged on rotation devices for angular velocities in the range of 90 rad/s and above.

16. The scan head according to one of the previous claims,
**characterised in that**
the working unit (V) is designed as a combination of a focusing lens system (9) and a gas nozzle (10).

17. The scan head according to Claim 16,
**characterised in that**
the focusing lens system (9) comprises optical correction elements at least for compensating for a spherical aberration and/or a coma aberration.

18. The scan head according to one of Claims 16 or 17,
**characterised in that**
the gas nozzle (10) comprises a gas supply with a program-controlled pressure valve.

19. The scan head according to Claim 1,

**characterised in that**
a beam profile unit (VI) with components for a selective coupling of the beam profile unit into the light path, various filter devices, and a camera device for detecting the beam profile is provided as an additional test and inspection unit.

20. The scan head according to Claim 19,
**characterised in that**
the component for the selective coupling is designed by a mechanical shutter (11), in particular in the form of a foldable mirror or prism.

21. The scan head according to one of Claims 19 or 20,
**characterised in that**
a first filter device in the beam profile unit (VI) is designed by a camera wedge (12) in combination with a dummy plug (BDS) for preventing an echo image.

22. The scan head according to one of Claims 19 to 21,
**characterised in that**
another filter device in the beam profile unit (VI) is designed by an intensity-reducing absorption filter arrangement, in particular, an absorption filter cascade (13).

23. The scan head according to one of Claims 19 to 22,
**characterised in that**
another filter means in the form of an interference filter (14) is provided which is pervious for a given working wave length.

24. The scan head according to one of Claims 19 to 23,
**characterised in that**
the camera device is designed by a CCD camera (15) in combination with an image processing software.

25. The scan head according to Claim 19,
**characterised in that**
furthermore, a plasma detector unit (VII) for registering the plasma formation and structure is provided as an additional test and inspection unit.

26. The scan head according to Claim 25,
**characterised in that**
the plasma detector unit (VII) comprises a semitransparent mirror (16), a coupling lens system (17), and a plasma detector (18).

27. The scan head according to Claim 19,
**characterised in that**
a viewing unit (VIII) for visually observing the focus is provided as an additional test and inspection unit.

28. The scan head according to Claim 27,
**characterised in that**
the viewing unit (VIII) comprises a projection lens system (20) which cooperates with the focusing lens system (9), a filter device (21), and a camera device, in particular, a CCD camera device (22).

**Revendications**

1. Tête de balayage en tant que partie d'un dispositif de perçage et de découpe à laser, comprenant :

    une série, agencée dans le trajet lumineux du laser, formée des composants suivants :

        une unité d'amortissement de rayonnement (I) assurant la régulation d'intensité ; un télescope (III) qui agrandit la section du rayonnement laser, un bloc de balayage (IV) qui mène le foyer du rayonnement laser, et une unité de travail (V) qui focalise le rayon laser sur un échantillon, ainsi que des unités de vérification et de contrôle additionnelles susceptible d'être couplées en option dans le trajet lumineux, **caractérisée en**

**ce qu'**il est prévu, en liaison avec l'unité d'amortissement de rayonnement, une unité (II) oscillante qui assure la régulation d'un décalage parallèle du rayonnement.

**2.** Tête de balayage selon la revendication 1, **caractérisée en ce que** l'unité d'amortissement de rayonnement (I) comprend une succession, agencée dans le trajet lumineux, formé d'une plaquette à □/2 ou d'un retardateur (1), d'une première fenêtre de Brewster (2) et d'une seconde fenêtre de Brewster (2a), dans laquelle le retardateur et/ou l'une au moins des deux fenêtres de Brewster est réalisé rotatif autour de l'axe optique.

**3.** Tête de balayage selon la revendication 2, **caractérisé en ce qu'**il est prévu une unité galvanométrique qui fait tourner le retardateur (1) autour de l'axe optique.

**4.** Tête de balayage selon l'une des revendications précédentes, **caractérisée en ce que**, dans un mode de réalisation, une unité rotative (Ia) qui fait tourner la direction de polarisation du rayonnement laser est introduite entre l'unité d'amortissement de rayonnement (I) et l'unité oscillante (II).

**5.** Tête de balayage selon la revendication 4, **caractérisée en ce que** l'unité rotative (Ia) comprend une plaquette à □/2 (2b) avec angle de réglage réglable depuis l'extérieur.

**6.** Tête de balayage selon l'une des revendications 4 au 5, **caractérisée en ce que** l'angle de réglage de la plaquette à □/2 correspond à une direction de polarisation linéaire du rayonnement laser dirigé sensiblement perpendiculairement localement par rapport à un flanc d'une jointure de coupe.

**7.** Tête de balayage selon l'une des revendications 4 à 6, **caractérisée par** une unité de commande qui modifie l'angle de réglage de la plaquette à □/2 en fonction d'un contour prédéterminé de la jointure de coupe, en association avec une unité de réglage mécanique.

**8.** Tête de balayage selon l'une des revendications précédentes, **caractérisée en ce que** l'unité oscillante (II) est réalisée par un agencement, introduit dans le trajet lumineux, constitué de deux fenêtres (3, 4) à plans parallèles, dans lesquelles l'axe de rotation de la première fenêtre (3) à plan parallèle, l'axe de rotation de la seconde fenêtre (4) à plan parallèle, et le sens de propagation du rayonnement laser sont orthogonaux les uns aux autres.

**9.** Tête de balayage selon la revendication 8, **caractérisée en ce que** les fenêtres (3, 4) à plans parallèles sont des unités galvanométriques tournant autour de leurs axes de rotation respectifs.

**10.** Tête de balayage selon l'une des revendications précédentes, **caractérisée en ce que** le télescope (III) est réalisé sous forme d'un agencement à lentille élargissant le rayonnement par réfraction.

**11.** Tête de balayage selon la revendication 10, **caractérisée en ce que** le télescope (III) est réalisé sous forme de télescope de Galilée avec au moins une lentille concave (5) est au moins un agencement à lentille de collimation convexe (6).

**12.** Tête de balayage selon la revendication 11, **caractérisée en ce que** l'agencement optique du télescope (III) comprend un agencement à lentille additionnel corrigeant les aberrations.

**13.** Tête de balayage selon l'une des revendications 10 à 12, **caractérisée en ce que** la lentille concave (5) et/ou l'agencement de lentille de collimation (6) est monté en translation le long de l'axe optique.

**14.** Tête de balayage selon l'une des revendications précédentes, **caractérisée en ce que** le bloc de balayage (IV) est réalisé sous forme d'un agencement de deux miroirs individuels (8, 8a) en rotation.

**15.** Tête de balayage selon la revendication 14, **caractérisée en ce que** les miroirs individuels (8, 8a) sont agencés sur des moyens de rotation pour des vitesses angulaires dans la plage de 90 radians/seconde et plus.

**16.** Tête de balayage selon l'une des revendications précédentes, **caractérisée en ce que** l'unité de travail (V) est réalisée sous forme d'une combinaison d'une optique de focalisation (9) et d'une buse à gaz (10).

**17.** Tête de balayage selon la revendication 16, **caractérisée en ce que** l'optique de focalisation (9) comprend des éléments de correction optique au moins pour compenser une aberration sphérique et/ou une aberration de Coma.

**18.** Tête de balayage selon l'une des revendications 16 ou 17, **caractérisée en ce que** la buse à gaz (10) comprend une amenée de gaz avec une valve de pression commandée par programme.

**19.** Tête de balayage selon la revendication 1, **caractérisée en ce qu'**il est prévu à titre d'unité additionnelle de vérification et de contrôle une unité de profilage de rayonnement (VI) avec des composantes pour un couplage sélectif de l'unité de profilage de rayonnement dans le trajet lumineux, divers dispositif de filtration, et un dispositif à caméra détectant le profilage de rayonnement.

**20.** Tête de balayage selon la revendication 19, **caractérisée en ce que** les composantes pour le couplage sélectif sont réalisées par un obturateur mécanique (11), en particulier sous la forme d'un miroir ou d'un prisme rabattable.

**21.** Tête de balayage selon l'une des revendications 19 ou 20, **caractérisée en ce qu'**un premier dispositif de filtration dans l'unité de profilage de rayonnement (VI) est réalisée par une plaque en coin (12), évitant une image double, en association avec un obturateur borgne (BDS).

**22.** Tête de balayage selon l'une des revendications 19 à 21, **caractérisée en ce qu'**un autre dispositif de filtration dans l'unité de profilage de rayonnement (VI) est réalisé par un agencement de filtrage par absorption réduisant l'intensité, en particulier une cascade de filtres par absorption (13).

**23.** Tête de balayage selon l'une des revendications 19 à 22, **caractérisée en ce qu'**il est prévu un autre dispositif de filtration sous la forme d'un filtre à interférence (14) transparent pour une longueur d'onde de travail donnée.

**24.** Tête de balayage selon l'une des revendications 19 à 23, **caractérisée en ce que** le dispositif à caméra est réalisé par une caméra à CCD (15) en association avec un logiciel de traitement d'images.

**25.** Tête de balayage selon la revendication 19, **caractérisée en ce qu'**il est prévu à titre d'unité additionnelle de vérification et de contrôle une unité de détecteur à plasma (VII) qui enregistre une formation et une structure de plasma.

**26.** Tête de balayage selon la revendication 25, **caractérisée en ce que** l'unité de détecteur à plasma (VII) comprend un miroir semi-transparent (16), une optique de couplage (17) et un détecteur de plasma (18).

**27.** Tête de balayage selon la revendication 19, **caractérisée en ce qu'**il est prévu à titre d'unité additionnelle de vérification et de contrôle une unité de visualisation (VIII) pour l'observation visuelle du foyer.

**28.** Tête de balayage selon la revendication 27, **caractérisée en ce que** l'unité de visualisation (VIII) comprend une optique de projection coopérant avec l'optique de focalisation (9), un dispositif de filtrage (21) et un dispositif à caméra, en particulier un dispositif à caméra CCD (22).

Figur 1a

Figur 1b

Figur 2a

Figur 2b

Retarder
principal axis
direction

θ

Emergent
linearly polarized
radiation with
rotated plane of
polarization

θ

Linearly
polarized input
radation

Figur 3

Figur 4

Figur 4a

Figur 4b

Figur 5

Figur 6

$d$

$f_1$

$f_2$

$D$

Figur 7a

$\Delta x$

$f_1$

$f_2$

$\Delta x_{BET}$

Figur 7b

Figur 8

Figur 9

Figur 10

Figur 11

BDS

15　　　　　　　　14　　　　　　　13　　　　　　12

11

Figur 12

Figur 13a

Figur 13b

Figur 13c

Figur 14a

Figur 14b

Figur 15